(19)

Europäisches
Patentamt
European
Patent Office
Office européen
des brevets

(11) **EP 4 236 520 A1**

(12) **EUROPEAN PATENT APPLICATION**
published in accordance with Art. 153(4) EPC

(43) Date of publication:
**30.08.2023 Bulletin 2023/35**

(21) Application number: **21883318.4**

(22) Date of filing: **22.10.2021**

(51) International Patent Classification (IPC):
*H04W 72/02* (2009.01)   *H04W 72/12* (2023.01)
*H04W 74/08* (2009.01)   *H04W 4/46* (2018.01)

(52) Cooperative Patent Classification (CPC):
**H04W 4/46; H04W 72/02; H04W 72/12;
H04W 74/08**

(86) International application number:
**PCT/KR2021/014876**

(87) International publication number:
**WO 2022/086251 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.10.2020 KR 20200138636**

(71) Applicant: **Innovative Technology Lab Co., Ltd.
Seoul 06744 (KR)**

(72) Inventor: **PARK, Dong Hyun
Seoul 06744 (KR)**

(74) Representative: **Diehl & Partner
Patent- und Rechtsanwaltskanzlei mbB
Erika-Mann-Straße 9
80636 München (DE)**

(54) **METHOD AND DEVICE FOR SELECTING RESOURCE IN WIRELESS COMMUNICATION
SYSTEM**

(57)     Provided is a method of supporting, by a user equipment (UE), sidelink communication in a wireless communication system, the method including receiving a coordination request from a transmitting UE (Tx UE); generating a coordination message based on the coordination request; and transmitting the generated coordination message to the Tx UE. Here, the generated coordination message may be generated based on a different type, and a resource used to transmit the coordination message may be configured based on at least one of a pre-configured dedicated resource and a resource determined by sensing.

FIG. 13

**Description**

TECHNICAL FIELD

The present disclosure relates to a method and apparatus for selecting resource in wireless communication system. More particularly, the present disclosure relates to a method and apparatus for selecting resource in wireless communication system in New Radio (NR) vehicle-to-everything (V2X).

RELATED ART

International Mobile Telecommunication (IMT) framework and standard have been developed by the International Telecommunication Union (ITU). Also, continuous discussion for 5-th generation (5G) communication is ongoing through a program called "IMT for 2020 and beyond".

To satisfy the requirements requested by "IMT for 2020 and beyond", various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, occurring on a high carrier frequency, the NR system may support transmission of a physical signal/channel through a plurality of beams. Through this, the NR system may support applications, for example, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to long term evolution (LTE)-based/New Radio (NR) based communication between vehicles, vehicle-to-pedestrian (V2P), which may refer to LTE-based/NR-based communication between a vehicle and a user equipment (UE) carried by a user, and vehicle-to-infrastructure/network (V2I/N), which may refer to LTE-based/NR-based communication between a vehicle and a roadside unit (RSU)/network. The RSU may be a transportation infrastructure entity configured by a base station or a fixed terminal, such as, an entity that transmits a speed notification to a vehicle.

However, in an environment where a plurality of UEs, a collision between resources for V2X may occur, thereby causing a delay in V2X communication.

DETAILED DESCRIPTION

TECHNICAL SUBJECT

A technical subject of the present disclosure may provide a method and apparatus for selecting resource in wireless communication system.

A technical subject of the present disclosure may provide a method and apparatus for selecting resource for V2X communication.

A technical subject of the present disclosure may provide a method and apparatus for selecting sidelink resource of a LTE through a coordination LTE (C-LTE).

A technical subject of the present disclosure may provide a method and apparatus for requesting resource coordination to the C-UE.

A technical subject of the present disclosure may provide a method and apparatus for the C-LTE to transmit resource coordination information to a transmitting LTE.

A technical subject of the present disclosure may provide a method and apparatus for the C-LTE to transmit resource coordination information in consideration of a resource coordination information type.

Technical subjects achievable from the present disclosure are not limited to the aforementioned technical subjects and still other technical subjects not described herein may be clearly understood by one of ordinary sill in the art to which the disclosure pertains from the following description.

TECHNICAL SOLUTION

According to an aspect of the present disclosure, a method of supporting, by a user equipment (UE), sidelink communication in a wireless communication system may be provided. Here, the method of supporting, by the UE, the sidelink communication may include receiving a coordination request from a transmitting UE (Tx UE); generating a coordination message based on the coordination request; and transmitting the generated coordination message to the Tx UE. Here, the generated coordination message may be generated based on a different type, and a resource used to transmit the coordination message may be configured based on at least one of a pre-configured dedicated resource and a resource determined by sensing.

EFFECT

According to the present disclosure, it is possible to provide a method and apparatus for preventing collision and selecting a resource for vehicle-to-everything (V2X) communication.

According to the present disclosure, it is possible to provide a method and apparatus for allowing a transmitting user equipment (Tx LTE) to select a sidelink resource based on information received from a coordination LTE (C-LTE) and preventing resource collision not recognized by the Tx UE.

According to the present disclosure, it is possible to provide a method and apparatus for allowing a C-UE to directly determine situations of neighboring Tx UEs and trigger a resource coordination procedure and preventing a resource collision not recognized by the Tx UEs.

According to the present disclosure, it is possible to provide a method and apparatus for allowing a C-UE to transmit resource coordination information of different types for resource selection of a Tx LTE.

A technical subject of the present disclosure may provide a method and apparatus for enhancing sidelink communication reliability in such a manner that a C-UE transmits resource coordination information to a Tx LTE.

The features briefly abstracted above with respect to the present disclosure are merely aspects of the detailed description of this disclosure and are not provided to limit the scope of the disclosure.

BRIEF DESCRIPTION OF DRAWINGS

FIG. 1 illustrates an example of a new radio (NR) frame structure to which the present disclosure may apply.
FIG. 2 illustrates an NR resource structure to which the present disclosure may apply.
FIG. 3 illustrates an NR sidelink slot structure to which the present disclosure may apply.
FIG. 4 illustrates an NR sidelink frequency to which the present disclosure may apply.
FIG. 5 illustrates a method of measuring a Channel Busy Ratio (CBR) to which the present disclosure may apply.
FIG. 6 illustrates an issue that occurs in a mode 2 resource allocation method to which the present disclosure may apply.
FIG. 7 illustrates a sidelink data transmission and reception scenario to which the present disclosure may apply.
FIG. 8 illustrates a method of performing explicit signaling for a device-to-device (D2D) coordination resource allocation procedure to which the present disclosure may apply.
FIG. 9 illustrates a condition-based resource coordination procedure performing method to which the present disclosure may apply.
FIG. 10 illustrates a window setting method based on CR reception to which the present disclosure may apply.
FIG. 11 illustrates a window setting method based on CR reception to which the present disclosure may apply.
FIG. 12 illustrates a window setting method based on CR reception to which the present disclosure may apply.
FIG. 13 illustrates a window setting method based on event-based triggering to which the present disclosure may apply.
FIG. 14 illustrates a dedicated resource-based window setting method to which the present disclosure may apply.
FIG. 15 illustrates a resource selection method to which the present disclosure may apply.
FIG. 16 illustrates a method of solving a duplex issue to which the present disclosure may apply.
FIG. 17 illustrates a method of selecting a resource based on a coordination user equipment (CUE) to which the present disclosure may apply.
FIG. 18 illustrates a frequency/time resource indication method for coordination message (CM) information to which the present disclosure may apply.
FIG. 19 illustrates a time/frequency resource unit determination method to which the present disclosure may apply.
FIG. 20 illustrates a method of reporting, by a C-UE, a CBR to a Tx UE to which the present disclosure may apply.
FIG. 21 illustrates a method of reporting, by a C-UE, CM information type 2 to a Tx LTE to which the present disclosure may apply.
FIG. 22 illustrates a method of transmitting, by a C-LTE, CM information to a Tx LTE in consideration of communication range to which the present disclosure may apply.
FIG. 23 illustrates a CM transmission procedure to which the present disclosure may apply.
FIG. 24 is a flowchart illustrating a CM transmission procedure to which the present disclosure may apply.
FIG. 25 is a diagram illustrating a base station device and a terminal device to which the present disclosure may apply.

DETAILED DESCRIPTION OF THE ILLUSTRATED EMBODIMENTS

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or intervening elements may be present. Also, it will be further understood that when an element is described to "comprise/include" or "have" another element, it specifies the presence of still another element, but do not preclude the presence of another element uncles otherwise described.

Further, the terms, such as first, second, and the like, may be used herein to describe elements in the description herein. The terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent that the elements are necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, elements described in various examples may not be necessarily essential and may be partially selectable. Therefore, an example including a partial set of elements described in an example is also included in the scope of the present disclosure. Also, an example that additionally includes another element to elements described in various examples is also included in the scope of the present disclosure.

The description described herein is related to a wireless communication network, and an operation performed in a wireless communication network may be performed in a process of controlling a network and transmitting data by a system that controls a wireless network, e.g., a base station, or may be performed in a user equipment connected to the wireless communication network.

It is apparent that various operations performed for communication with a terminal in a network including a base station and a plurality of network nodes may be performed by the base station or by other network nodes in addition to the base station. Here, the term 'base station (BS)' may be interchangeably used with other terms, for example, a fixed station, a Node B, eNodeB (eNB), gNodeB (gNB), and an access point (AP). Also, the term 'terminal' may be interchangeably used with other terms, for example, user equipment (LTE), a mobile station (MS), a mobile subscriber station (MSS), a subscriber station (SS), and a non-AP station (non-AP STA).

Herein, transmitting or receiving a channel includes a meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, occurring on a high carrier frequency, the NR system may support transmission of a physical signal/channel through a plurality of beams. Through this, the NR system may support applications, for example, enhanced Mobile Broadband (eMBB), massive Machine Type Communications (mMTC)/ultra Machine Type Communications (uMTC), and Ultra Reliable and Low Latency Communications (URLLC).

Here, 5G mobile communication technology may be defined by including the existing Long Term Evolution-Advanced (LTE-A) system as well as the aforementioned NR system. That is, 5G mobile communication technology may operate by considering backward compatibility with a previous system as well as a newly defined NR system. Therefore, following 5G mobile communication may include technology operating based on the NR system and a technology operating based on a previous system (e.g., LTE-A, LTE), and is not limited to a specific system.

First of all, the physical resource structure of the NR system to which the present disclosure is applied will be briefly described.

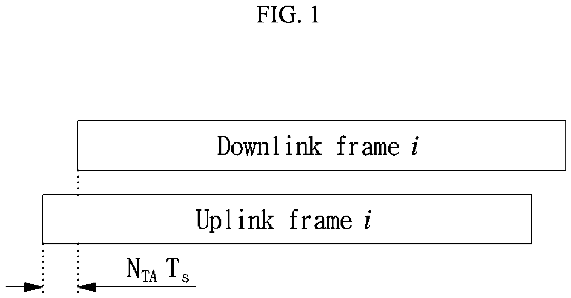

FIG. 1 illustrates an example of an NR frame structure according to an embodiment of the present disclosure.

In NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant about a multiple relationship between an NR time unit and an LTE time unit. In LTE, $T_s = 1/(\Delta f_{ref} \cdot N_{f\ ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max} N_f/100) \cdot T_s = 10ms$. Here, a single frame may include 10 subframes corresponding to $T_{sf} = (\Delta f_{max} N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0~4 subframes and 5~9 subframes. Here, half frame 1 may include 0~4 subframes and half frame 2 may include 5~9 subframes.

$N_{TA}$ represent the timing advance (TA) between downlink (DL) and uplink (UL). Here, a transmission timing of uplink transmission frame i is determined based on a downlink reception timing at a LTE according to the following Equation 1.

[Equation 1]

$$T_{TA} = \left(N_{TA} + N_{TA,offset}\right)T_c$$

$N_{TA,offset}$ denotes a TA offset value occurring due to a duplex mode difference and the like. Basically, in a frequency division duplex (FDD), $N_{TA,offset} = 0$. In a time division duplex (TDD), $N_{TA,offset}$ may be defined as a fixed value by considering a margin for a DL-LTL switching time. For example, in the TDD (Time Division Duplex) of RF1 (Frequency Range 1) which is a sub-6GHz or less frequency, $N_{TA,offset}$ may be 39936Tc or 2600Tc. $39936T_C = 20.327\mu s$ and $25600T_C = 13.030\mu s$. Also, in FR2 (Frequency Range 2) which is millimeter wave (mmWave), $N_{TA,offset}$ may be 13792Tc. At this time, $39936Tc = 7.020\ \mu s$.

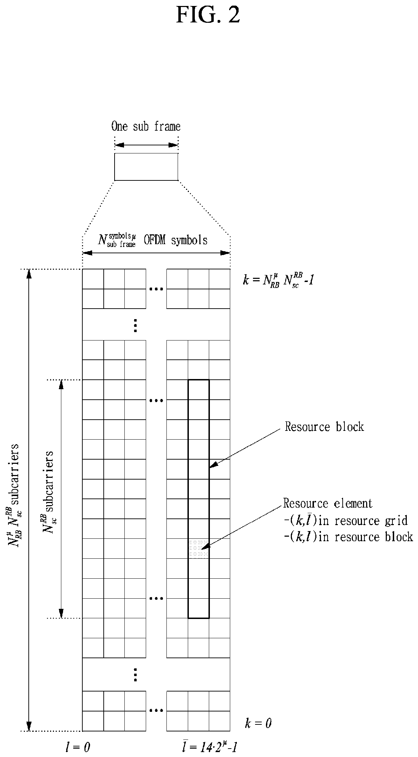

FIG.2 illustrates an NR resource structure to which the present disclosure may apply.

A resource element within a resource grid may be indexed based on each subcarrier spacing. Here, a single resource grid may be generated for each antenna port and for each subcarrier spacing. Uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, $N^{RB}_{sc}$ represents the number of subcarriers per one RB and k represents subcarrier index.

[Equation 2]

$$n_{PRB} = \left\lfloor \frac{k}{N_{sc}^{RB}} \right\rfloor$$

Numerologies may be variously configured to meet various services and requirements of the NR system. For example, one subcarrier spacing (SCS) may be supported in the LTE/LTE-A system, but a plurality of SCS may be supported in the NR system.

A new numerology for the NR system that supports the plurality of SCSs may operate in frequency range or carrier, such as 3 GHz or less, 3 GHz-6 GHz, 6 GHZ-52.6 GHz, or 52.6 GHz or more, to solve an issue that a wide bandwidth is unavailable in frequency range or carrier such as 700 MHz or 2 GHz.

Table 1 below shows an example of the numerologies supported by the NR system.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |

(continued)

| $\mu$ | $\Delta f=2^{\mu}\cdot 15$ [kHz] | Cyclic prefix |
|---|---|---|
| 3 | 120 | Normal |
| 4 | 240 | Normal |

Referring to the following Table 1, the numerologies may be defined based on an SCS, a cyclic prefix (CP) length, and a number of OFDM symbols per slot, which are used in an OFDM system. The aforementioned values may be provided to a UE through upper layer parameters, DL-BWP-mu and DL-BWP-cp, for the downlink, and through upper layer parameter, UL-BWP-mu and UL-BWP-cp, for the uplink.

In above Table 1, if $\mu$ = 2 and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for a length of another time section. Here, for coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having a number of symbols less by at least one symbol than that of the normal slot. For example, in the case of providing a low latency such as an Ultra-Reliable and Low Latency Communications (URLLC) service, a latency may decrease through the non-slot having the number of slots less than that of the normal slot. Here, the number of OFDM symbols included in the non-slot may be determined based on a frequency range. For example, a non-slot with 1 OFDM symbol length may be considered in the frequency range of 6 GHz or more. As another example, a number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7 as a non-slot standard, it is provided as an example only.

Also, for example, an SCS corresponding to $\mu$ = 1 and 2 may be used in the unlicensed band of 6 GHz or less and an SCS corresponding to $\mu$ = 3 and 4 may be used in the unlicensed band above 6 GHz. Here, for example, if $\mu$ = 4, it may be used for a synchronization signal block (SSB)

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ($N^{slot}_{symb}$), a number of slots per frame ($N^{frame,\mu}_{slot}$), and a number of slots per subframe ($N^{subframe,\mu}_{slot}$) for the normal CP by subcarrier spacing setting. In Table 2, the values are based on the normal slot having 14 OFDM symbols.

[Table 3]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot of which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although SCS of 480kHz may not be considered in Table 4, the present disclosure is not limited to such examples.

[Table 4]

| SCS | Number of slots in 10ms (14 symbols in 1 slot) | Number of slots in 10ms (7 symbols in 1 slot) | Number of symbols in 10 ms |
|---|---|---|---|
| 15kHz | 10 | 20 | 140 |
| 30kHz | 20 | 40 | 280 |
| 60kHz | 40 | 80 | 560 |
| 120kHz | 80 | 160 | 1120 |
| 240kHz | 160 | 320 | 2240 |
| 480kHz | 320 | 640 | 4480 |

The V2X service may support a set of basic requirements for V2X services. The requirements are designed basically in sufficient consideration of a road safety service. Here, V2X UE may exchange autonomous status information through a sidelink. Also V2X UE may exchange the information with infrastructure nodes and/or pedestrians.

The V2X service (e.g., LTE Rel-15) may support at least one of a carrier aggregation in a sidelink, a high order modulation, a latency reduction, a transmit (Tx) diversity, and sTTI (Transmission Time Interval). For this purpose, new features may be applied to the V2X communication. More particularly, V2X UE may operate in consideration of coexistence with other V2X UEs. For example, V2X UE may use the same resource pool as other V2X UEs.

For example, technical features may be classified largely based on four categories as represented by the following Table 5 by considering use cases for supporting a V2X service as system aspect (SA) 1, but are not limited thereto. In Table 5, "Vehicles Platooning" may be technology that enables a plurality of vehicles to dynamically form a group and similarly operate. "Extended Sensors" may be technology that enables exchange of data gathered from sensors or video images. "Advanced Driving" may be technology that enables a vehicle to drive based on semi-automation or full-automation. "Remote Driving" may be technology for remotely controlling a vehicle and technology for providing an application. Based thereon, further description related thereto may be given by the following Table 5.

[Table 5]

| Vehicles Platooning |
|---|
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor** |
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| **Advanced Driving** |
| Advanced Driving enables semi-automated or full-automated driving. Each vehicle and/or RSU shares its own perception data obtained from its local sensors with vehicles in proximity and that allows vehicles to synchronize and coordinate their trajectories or maneuvers. Each |
| vehicle shares its driving intention with vehicles in proximity too. |

(continued)

| Remote Driving |
| --- |
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR sidelink based on the NR V2X system. However, the same or similar composition may be expanded and applied to the LTE V2X system, and is not limited to following examples. That is, in the LTE V2X system, the present disclosure may apply to an interactable portion.

Here, NR V2X capability may not be limited to essentially support only V2X services and V2X RAT to be used may be selected.

As a detailed example, a physical channel, a signal, a basic slot structure, and a physical resource may be configured for the NR V2X. Here, an NR Physical Sidelink Shared Channel (NR PSSCH) may be a physical layer NR sidelink (SL) data channel. V2X UEs may exchange data and control information (e.g., 2nd SCI, CSI) through the NR PSSCH. An NR Physical Sidelink Control Channel (NR PSCCH) may be a physical layer NR SL control channel. The NR PSCCH refers to a channel for transmitting scheduling information of the NR SL data channel and control information (1st Sidelink Control Information (SCI)) including 2nd SCI indication. That is, a V2X UE may transmit control information for sidelink data communication to another V2X UE through PSCCH. An NR Physical Sidelink Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X LTE and then may receive HARQ feedback information of the corresponding data through NR PSFCH. An NR Sidelink Synchronization Signal/Physical Sidelink Broadcast Channel (SLSS/PSBCH) block refers to a channel block in which an NR sidelink synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary Sidelink Synchronization Signal (PSSS) and a Secondary Sidelink Synchronization Signal (SSSS). The synchronization signal is generated based on at least one SLSSID value. The NR Physical Sidelink Broadcast Channel (PSBCH) refers to a channel for transmitting system information required to perform V2X sidelink communication. The NR PSBCH is transmitted with the SLSS and periodically transmitted based on a set of SLSS/PSBCH block indexes to support beam-based transmission.

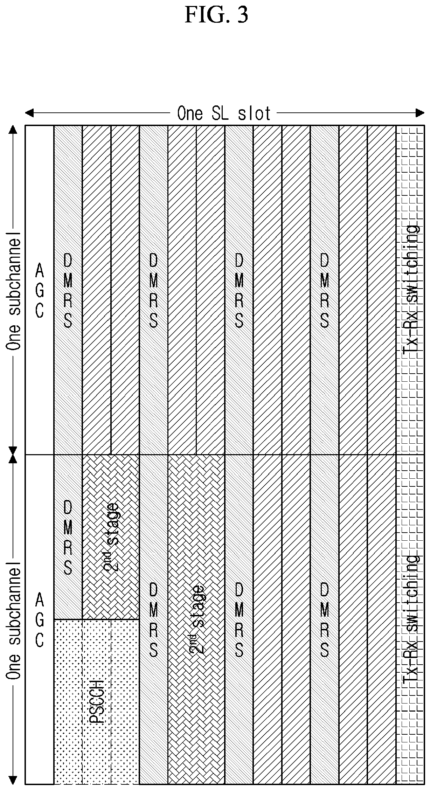

FIG. 3 illustrates an NR sidelink slot structure to which the present disclosure may apply.

Referring to FIG. 3, a single sidelink slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to remaining OFDM symbols excluding the AGC symbol and the Tx-Rx switching symbol. In detail, locations of PSCCH (1st SCI), 2nd SCI, PSSCH (Data), and DMRS for demodulation may be the same as in FIG. 3, but are not limited thereto. For example, in FIG. 3, PSCCH and 2nd SCI are present in the first subchannel and PSSCH and DMRS may be allocated considering this. As another example, the second subchannel refers to a subchannel in which PSCCH and 2nd SCI are absent and PSSCH and DMRS may be allocated as in FIG. 3.

Here, the number of PSSCH DMRSs may be configured according to an upper layer configuration and one or more PSSCH DMRSs may be configured according to a channel environment of UE. PSCCH (1st SCI) receives demodulation using DMRS of PSCCH (i.e., PSCCH DMRS) and is equally allocated and transmitted every four resource elements (REs) within a single resource block (RB). On the contrary, 2nd SCI is decoded using PSSCH DMRS.

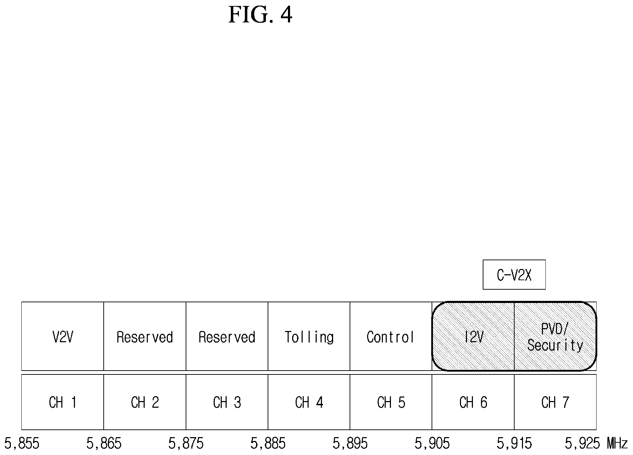

FIG. 4 illustrates an NR sidelink frequency to which the present disclosure may apply. For example, NR sidelink may operate based on at least one of Frequency Range 1 (FR1) (sub 6 GHz) and Frequency Range 2 (FR2) (i.e., up to 52.6 GHz), unlicensed ITS bands, and licensed band.

In detail, for example, referring to FIG. 4, 5,855 to 5,925 MHz may be allocated for an ITS service (technology neutral manner).

Also, NR V2X quality of service (QoS) requirements may be considered. That is, delay, reliability, and a data rate may need to satisfy a predetermined condition as requirements for an NR V2X service. Here, the requirements may be configured as in Table 6 below and Table 7 may show PC5 QoS for NR V2X.

Here, to satisfy QoS requirements, access stratum (AS) level QoS management may be required. To this end, HARQ and CSI feedback associated with link adaptation may be required. Also, each of NR V2X UEs may have a different maximum bandwidth capability (max. BW capability). Considering this, AS level information that includes at least one of LTE capability, QoS related information, radio bearer configuration, and physical layer configuration may be exchanged between NR V2X UEs.

[Table 6]

| |
| --- |
| Delay:[3, 100ms]<br>Reliability :[90%, 99.999%]<br>Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
| --- | --- | --- | --- | --- | --- | --- | --- |
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |

(continued)

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |
| •NOTE 1: GBR and Delay Critical GBR PQIs can only be used for unicast PC5 communications. Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a sidelink HARQ procedure is described. Whether V2X LTE is to report HARQ feedback is indicated by upper layer (e.g., RRC) configuration and SCI signaling (e.g., 2nd SCI). For example, when the V2X LTE performs communication based on a groupcast, whether to report the HARQ feedback may be determined based on a distance between a transmitting UE (Tx UE) and a receiving UE (Rx UE).

When the V2X UE performs at least one of unicast and groupcast, sidelink HARQ feedback may be enabled or disabled. Here, enabling/disabling of the HARQ feedback may be determined based on at least one of a channel condition (e.g., RSRP), a distance between Tx UE and Rx UE, and QoS requirements.

In the case of groupcast, whether to transmit HARQ feedback may be determined based on a physical distance between the Tx UE and the Rx UE. Here, when the HARQ feedback is performed based on the groupcast, the Rx UE may operate by feeding back a negative response only when PSSCH decoding fails. It may be an option 1 operation. On the other hand, when HARQ feedback is performed based on the groupcast, the Rx UE may operate by feeding back a positive response or a negative response based on whether PSSCH decoding succeeds and it may be an option 2 operation. In the option 1 operation of feeding back only a negative response as HARQ NACK based on the groupcast, if the physical distance between the Tx UE and the Rx LTE is less than or equal to communication range requirements, feedback on PSSCH may be performed. On the contrary, if the physical distance between the Tx UE and the Rx LTE is greater than the communication range requirements, the V2X LTE may not perform feedback on PSSCH.

Here, a location of the Tx UE is indicated to the Rx UE through SCI associated with the PSSCH. The Rx UE may estimate a distance from the Tx UE based on information included in SCI and its location information and may operate as above.

Also, when unicast communication is performed based on V2X, a case in which sidelink HARQ feedback is enabled may be considered. The Rx UE may generate and transmit HARQ ACK/NACK for PSSCH depending on whether decoding of a corresponding transport block (TB) succeeds.

Then, an NR sidelink resource allocation mode refers to a mode in which a base station schedules a sidelink transmission resource. Here, a mode in which the base station schedules a sidelink transmission resource may be mode 1. For example, when the V2X UE is located within base station coverage, the V2X UE may receive sidelink resource information from the base station. On the contrary, there is a mode in which the V2X UE directly determines a resource for sidelink transmission between a sidelink resource configured by the base station/network and a pre-configured sidelink resource. Here, a mode in which the UE directly determines a sidelink transmission resource may be mode 2.

Also, a sidelink received signal strength indicator (SL RSSI) is defined as an average value (in [W]) of total received power measured from subchannels configured within OFDM symbols of a slot configured for PSCCH and PSSCH.

Also, the V2X UE may measure a sidelink Channel busy ratio (SL CBR) in slot n. Here, CBR measurement is performed within CBR measurement window ([$n$-$a$, $n$-1]). The CBR measurement window is configured based on an upper layer parameter value *"timeWindowSize-CBR"* and the above a value has one value of 100 or 100-2$^{\mu}$ slots. The CBR measurement refers to a value used to define a ratio of subchannels having an SL-RSSI value exceeding a predetermined threshold among subchannels in the entire resource pool.

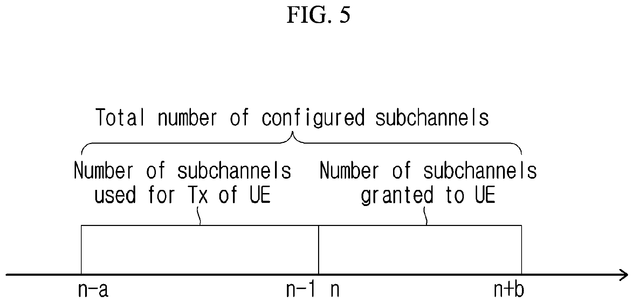

For example, FIG. 5 illustrates a method of measuring a Channel occupancy Ratio (CR) to which the present disclosure may apply.

Referring to FIG. 5, V2X LTE may measure a CR in slot n. Here, slots up to [$n$-a, n+b] are slots allowed for the V2X LTE and slots [$n$-a, $n$-1] are slots used by the V2X UE for SL transmission. In slot n, a CR value may be a value acquired by dividing a total number of subchannels in [$n$-a, $n$-1] and a total number of subchannels in [$n$, $n$+b] by a total number of subchannels configured in a transmission resource pool corresponding to time [$n$-a, $n$+b].

In detail, a has a positive value at all times in a time section (slots [$n$-a, $n$-1]) used for sidelink transmission. On the contrary, b within time (slots [$n$, $n$+b]) for counting the number of subchannels of a resource allowed for LTE has a value of 0 or a positive value. Values of a and b are determined to satisfy all the conditions of $a+b+1$ = 1000 or 1000·2$^{\mu}$ slots and b < (a+b+1)/2 by UE implementation. As another example, values of a and b are set to use one value of 1000 or 1000 - 2$^{\mu}$ slots by upper layer parameter *"timeWindowSize-CR"*. Also, a value of n+b should not exceed a last transmission occasion of grant for current transmission. Here, a slot for CBR and CR may be a physical slot and the CBR and the CR may be measured every time transmission is performed.

In the following, a new NR sidelink resource allocation operation method that considers requirements for various services using a device-to-device (D2D) sidelink, such as a V2X service, a public safety, a wearable, and an augmented reality/virtual reality (AR/VR) service is described. The NR sidelink may be applied for the aforementioned additional various service cases as well as the service based on Table 5. An NR sidelink frequency for NR sidelink operation may be present within FR1 (410 MHz~7.125 GHz) and FR2 (24.25 GHz ~ 52.6 GHz). Also, the NR sidelink frequency for NR sidelink operation may be present within frequency unlicensed ITS bands and licensed bands ITS. Therefore, the NR sidelink may be configured in consideration of applicability in various frequency bands. Also, the NR sidelink may operate using an Uu link that is a wireless access interface between a base station and a LTE. In particular, when the LTE is connected within base station coverage, configuration related to sidelink data transmission and reception and sidelink physical resource allocation may be configured by the base station through the Uu link. Therefore, an NR V2X sidelink transmission and reception procedure needs to be configured in consideration of Uu link of LTE (ng-eNB)/NR (gNB) that is 3GPP NG-RAN. Although the term "base station" is used in the following for clarity of description, the base station may be ng-eNB or gNB in the NG-RAN. The present disclosure is not limited to the aforementioned embodiment.

Regarding an NR sidelink operation, a mode 2 resource allocation method may be a resource allocation mode in which a Tx UE senses and selects a resource (on the contrary, as described above, mode 1 is a mode in which the base station indicates a resource for NR sidelink transmission and reception), which is described above. That is, the Tx UE may directly configure a resource for the NR sidelink without scheduling from the base station. The mode 2 resource allocation method may have low reception reliability (e.g., packet reception rate (PRR), packet inter-reception (PIR)) compared to the mode 1 method in which a sidelink resource is allocated and controlled by the base station.

Here, since the Tx UE directly senses and selects a sidelink resource, the Tx UE that operates in mode 2 may not recognize a hidden node UE and accordingly, may have low reliability compared to a case in which an NR sidelink resource is selected by the base station. Also, since the Tx UE directly senses and selects the resource, the Tx UE may not recognize collision/interference compared to a case in which scheduling is performed by the base station. Also, when the Tx LTE operates based on a half-duplex method, the Tx LTE may not avoid a situation in which transmission and reception collide and may have low reliability accordingly. In providing various services through NR sidelink, requirements for service provision need to be satisfied. A new resource allocation method is required to enhance reception reliability and transmission and reception delay of mode 2 operation.

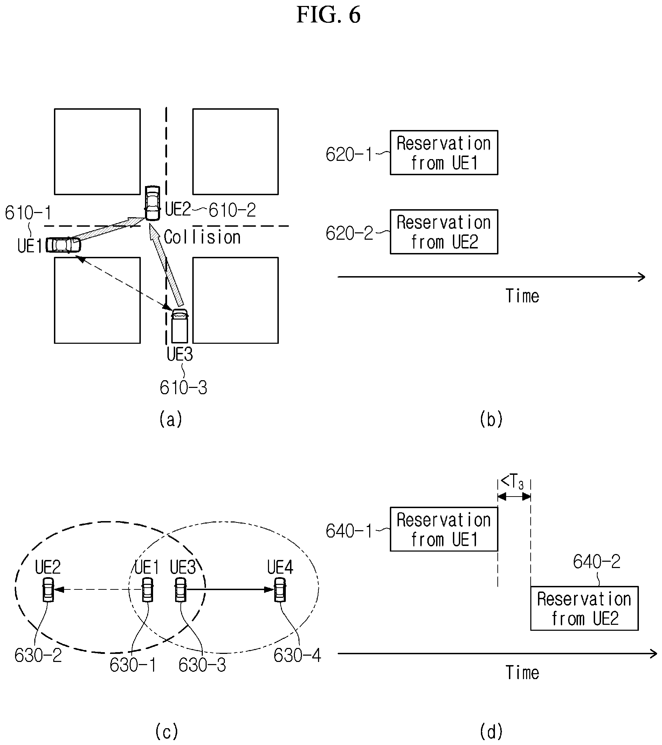

FIG. 6 illustrates an issue that occurs in a mode 2 resource allocation method to which the present disclosure may apply.

The mode 2 resource allocation method refers to a method in which a Tx UE performs resource sensing and then directly selects and transmits a resource. Regarding an issue of decreasing reliability of the mode 2 resource allocation method, (a) of FIG. 6 illustrates an issue caused by a hidden node UE. In detail, although collision for transmission between Tx UEs (UE1 610-1 and UE3 610-3) may not be mutually sensed, it may affect an Rx UE (UE2 610-2). That is, since the Tx UEs (UE1 610-1 and UE3 610-3) may not recognize each other, they may be hidden node UEs with respect to each other. In the above situation, when a Tx LTE performs initial transmission in which reservation may not be performed, a resource collision may occur. Also, although a Tx UE is on a previously reserved resource, the Tx UE may not recognize another UE similar to a case in which 1st SCI reception of another UE fails. In this case, a transmission resource collision may occur.

As another example, when the Tx UEs (UE1 610-1 and UE3 610-3) simultaneously select the same resource or when a single Tx LTE performs resource reservation and then there is no enough time for another Tx UE to verify reservation information, the Tx UEs (UE1 610-1 and LTE3 610-3) may not readily recognize each other and a resource collision may occur accordingly. For example, when a Tx LTE performs aperiodic transmission or performs fast transmission based on short packet delay budge (PDB), time may be insufficient for the Tx UE to verify reservation information of another Tx UE.

Referring to (b) of FIG. 6, a resource collision may occur based on a half-duplex communication method. In the case of performing communication based on the half-duplex communication method, a Tx LTE may not receive a signal in a slot of transmitting a signal. The Tx UE may receive SCI from neighboring UEs and may prevent a collision between a transmission resource and a reception resource using resource reservation information of the SCI. Here, since the Tx LTE may not use resource reservation information of SCI that is not received from a neighboring UE, a resource use efficiency issue may occur. That is, the Tx LTE may more reserve unnecessary resources or may not perform more retransmissions. Therefore, there may be a need for a time division multiplexing (TDM)-based D2D transmission and reception operation that may decrease effect of mutual interference. To this end, coordination information may be required. In detail, in (b) of FIG. 6, in a case in which a reserved resource 620-1 of UE1 and a reserved resource 620-2 of UE2 are configured in the same slot, if UE1 and UE2 are UEs that may affect interference mutually, resources need to be differently allocated based on TDM to prevent a resource collision.

Referring to (c) of FIG. 6, resource efficiency may be degraded due to an exposed node. A situation in which LTE1 630-1 transmits data to UE2 630-2 and LTE3 630-3 transmits data to UE4 630-4 may be considered. Here, the UE1 630-1 and the UE3 630-3 are located adjacently, but transmit data to different UEs. Since the UE1 630-1 is adjacent to the UE3 630-3, the UE1 630-1 may exclude a resource of the LTE3 630-3 from its resource selection. Here, although the excluded resource is used, a great interference issue does not occur. That is, the UE1 630-1 may unnecessarily exclude a resource in which a collision does not occur. Although the UE3 630-3 performs data transmission in a resource excluded by the UE2 630-2, an interference issue does not occur in terms of a location. Therefore, reliability and efficiency of a transmission resource may be enhanced. Here, the existing mode 2 resource allocation method does not consider the above situation and thus, needs to consider the above situation.

Referring to (d) of FIG. 6, when UEs acquire similar sensing results at adjacent points in time, a resource collision/interference issue may occur. Here, if time is short to recognize sensing results based on at least one of an SCI decoding error, a lack of random selection resources within a resource selection procedure, and an RSRP measurement error, a collision may occur. In detail, when a reserved resource 640-1 of UE1 and a reserved resource 640-2 of UE2 are allocated at adjacent points in time, allocated resources may not be recognized according to the operation and resource exclusion may not be performed, and a collision may occur accordingly.

An inter-UE coordination technique may need to be considered in consideration of the above issue. That is, a Tx UE may receive resource-related information from a coordination LTE (CUE) and may select a resource. In the following, a detailed method is described. Also, in the following, the inter-LTE coordination technique is referred to as a resource coordination procedure. That is, a procedure in which the Tx LTE receives resource-related information from the C-UE and selects a resource may be a resource coordination procedure. However, it is a name only for clarity of description, and the present disclosure is not limited thereto.

In the mode 2 resource allocation method of sensing, by the Tx UE, and directly selecting a resource as in FIG. 6, reliability may be low due to the resource collision issue. Therefore, a method for solving a resource collision issue of the mode 2 resource allocation method may be required. In detail, the resource collision issue may be prevented based on a non-hierarchical mutual UE coordination method and a hierarchical mutual UE coordination method. Here, the hierarchical mutual UE coordination method may refer to a method of performing, by a mode 2 Tx UE, sidelink transmission on a resource provided without a resource sensing and resource selection procedure based on resource allocation information indicated by a specific UE (e.g., coordinating UE or road side unit (RSU)). That is, a method of scheduling, by the C-UE, a resource of the Tx LTE may be the hierarchical mutual LTE coordination method.

The non-hierarchical mutual LTE coordination method may refer to a method of providing only information helpful to D2D resource allocation and not providing scheduling information related to a direct resource allocation. That is, the hierarchical mutual LTE coordination method and the non-hierarchical UE coordination method may be distinguished depending on whether the C-UE directly performs sidelink resource scheduling on a mode 2 Tx UE. Here, the hierarchical mutual LTE coordination method and the non-hierarchical LTE coordination method are provided as examples only and may be named differently.

In the following, a resource allocation method of a mode 2 UE is described based on the non-hierarchical LTE coordination method. That is, a Tx LTE may perform sidelink transmission by receiving information related to resource allocation from a C-UE and by selecting a resource based on the received information. For example, the following new resource allocation method for the mode 2 UE may be applied based on any one or at least one of unicast, groupcast, and broadcast as a specific cast type. For example, a new mode 2 Tx UE that needs to select a resource for a unicast transmission packet may receive in advance information that may be helpful for a resource selection from an Rx LTE that is a unicast pair LTE and then may perform the resource selection for transmission of the unicast transmission packet. Additionally, a new mode 2 Tx UE having a groupcast transmission packet may acquire resource coordination information for the corresponding groupcast transmission from a specific UE (e.g., a UE having a specific member ID) within the corresponding group.

As another example, the following resource allocation method of the mode 2 LTE may apply to all the cast types regardless of a cast type and is not limited to the aforementioned embodiment.

Therefore, at least one of or more combinations of the following methods may be selectively or equally applied according to a cast type that is considered between UEs that perform a mutual UE coordination method.

In the following, an operation of a LTE having capability of performing an operation related to coordination information request and coordination information transmission is described. That is, a sidelink LTE may determine whether a specific LTE may perform a proposed operation according to UE capability. Also, a UE having the capability may perform the aforementioned operation based on at least one or a combination of an additional execution condition (or configuration) and signaling.

In detail, when a resource of the mode 2 UE is allocated based on the non-hierarchical mutual UE coordination method, a non-hierarchical mutual UE coordination request may be triggered. Regarding a situation in which the non-hierarchical mutual UE coordination method is required, a C-UE needs to recognize a situation in which resource selection of the mode 2 Tx UE (hereinafter, Tx UE) is required. That is, the Tx UE or the C-UE may recognize a point in time at which the new resource allocation method applies and a corresponding situation and may trigger a non-hierarchical mutual LTE coordination procedure. For example, when signaling or a specific condition is satisfied, the non-hierarchical mutual UE coordination procedure may be performed by the Tx UE or the C-UE. Here, the C-UE may be an Rx UE or a unit (e.g., RSU) capable of performing sidelink transmission and reception. As another example, the CUE may be another UE adjacent to the Tx UE or unit capable of performing sidelink transmission and reception. The C-UE may be a UE for cooperating resource allocation of the Tx UE and is not limited to a specific type UE. For example, at least one of the Tx UE, the Rx LTE, the C-UE, and the base station may be present in consideration of a mutual C-UE.

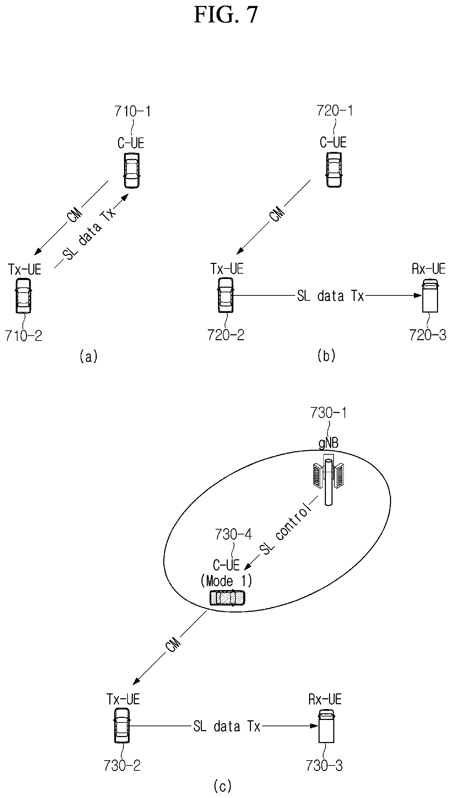

FIG. 7 illustrates a sidelink data transmission and reception scenario to which the present disclosure may apply.

Referring to (a) of FIG. 7, an Rx UE 710-1 may be a C-UE. A Tx UE 710-2 may receive coordination message (CM) information from the C-LTE 710-1. Here, the CM information may be information on a set of preferred resources or a set of nonpreferred resources of the C-UE 710-1 for data reception. For example, the C-UE 710-1 may receive SCI from neighboring Tx UEs and may generate information on a preferred resource set or a non-referred resource set based on verified information. Also, the C-UE 710-1 may generate information on the preferred resource set or the non-referred resource set based on another information and the present disclosure is not limited to the aforementioned embodiment.

Hereinafter, resource set information provided by a C-UE may include information resource preferred by a Tx UE or a resource that needs to be excluded, that is, nonpreferred by the Tx UE.

Referring to (b) of FIG. 7, a C-UE 720-1 may be a third UE. A Tx UE 720-2 receives CM information from the C-UE 720-1 to perform data transmission to an Rx UE 720-3. The Tx LTE 720-2 may transmit sidelink data to the Rx LTE 720-3 in a resource determined based on the CM information. As a detailed example, the C-UE 720-1 may provide resource set information (CM) to the Tx UE 720-2 in consideration of a situation in which a half-duplex issue or a consistent resource collision issue occurs between the Tx UE 720-2 and the Rx UE 720-3. The Tx UE 720-2 may transmit data to the Rx UE 720-3 by performing its resource selection procedure based on the received CM information.

Referring to (c) of FIG. 7, a C-UE 730-4 may be a UE that receives scheduling on resource allocation from a base station (e.g., LTE/NR base station) 730-1. That is, the C-UE 730-4 may be a mode 1 UE. A Tx UE 730-2 receives CM information from the C-LTE 730-4 to perform data transmission to an Rx UE 730-3. The Tx UE 730-2 may transmit sidelink data to the Rx UE 730-3 in a resource determined based on the CM information. As a detailed example, the C-UE 730-4 may generate resource set information (CM) and may provide the same to the Tx UE 730-2 in consideration of a situation in which a half-duplex issue or a consistent resource collision issue occurs between the Tx UE 730-2 and the Rx UE 730-3. As another example, the C-UE 730-4 may generate coordination resource set information (CM) and may provide the same to the Tx LTE 730-1 in consideration of scheduling resource information and/or resource pool allocated to generate resource coordination information from the base station 730-1, and resource configurations for avoiding a resource collision between in-coverage UE (mode1) and mode 2 UE, a hidden node issue, and a half-duplex issue. However, it is provided as an example only and the present disclosure is not limited to the aforementioned embodiment. The Tx LTE 730-2 may perform data transmission to the Rx LTE 730-3 by performing its resource selection procedure based on the received CM information.

Also, for example, in FIG. 7, a C-UE may be a mode 1 UE or a mode 2 UE. That is, the C-UE may be the mode 1 UE that receives resource scheduling by a base station or the mode 2 UE that directly senses and selects a resource. On the contrary, a Tx UE may be the above mode 2 UE. As described above, the D2D coordination resource procedure may need to be performed such that the Tx UE may receive CM information from the C-UE. To this end, the D2D coordination resource procedure needs to be triggered and a method of triggering a D2D coordination resource procedure is described in the following.

The D2D coordination resource allocation procedure may be performed based on explicit signaling. As another example, D2D coordination resource allocation may be performed depending on whether a specific condition and configuration are satisfied.

When the D2D coordination resource allocation procedure is explicitly performed, the Tx UE may transmit explicit signaling. The Tx UE may be the mode 2 Tx UE that senses and directly selects a resource or the mode 1 Tx LTE that receives resource scheduling from the base station. That is, the mode 2 Tx UE or the mode 1 Tx UE may transmit explicit signaling for the D2D coordination resource allocation procedure. As another example, the base station may transmit explicit signaling for the D2D coordination resource allocation procedure. In the following, description is made based on the Tx UE for clarity of description. Here, the Tx UE may be the mode 2 Tx UE and the mode 1 Tx UE. Also, although the base station may perform the same operation as the following operation of the Tx LTE, the following description is made based on the Tx LTE for clarity of description.

Also, for example, explicit signaling for the coordination resource allocation procedure may be performed based on at least one of unicast transmission and groupcast transmission.

In detail, for example, for explicit signaling for the D2D coordination resource allocation procedure, a Medium Access Control (MAC)/Radio Resource Control (RRC) layer of a LTE may request a physical (PHY) layer for coordination request (CR) transmission. The MAC/RRC layer of the UE may provide resource configuration information for the CR transmission to the PHY layer and, based thereon, may request the PHY layer for the CR transmission.

As another example, without a request from an upper layer, the PHY layer of the UE may perform the CR transmission based on configuration provided from the upper layer.

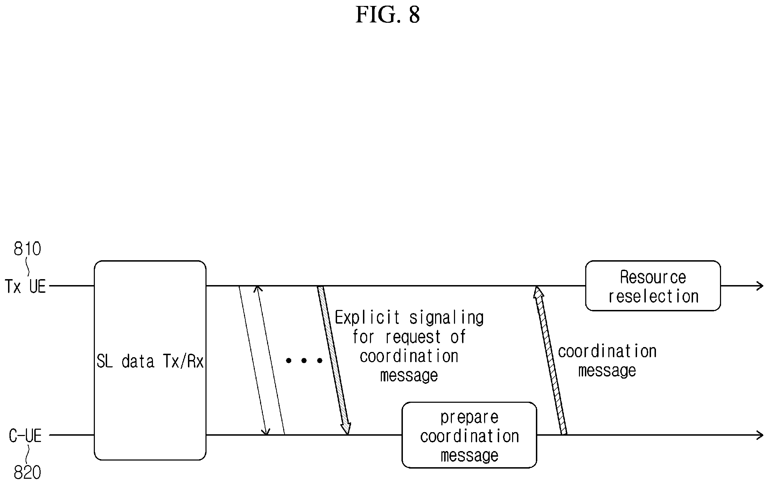

FIG. 8 illustrates a method of performing explicit signaling for a D2D coordination resource allocation procedure to which the present disclosure may apply.

Referring to FIG. 8, a Tx UE 810 and a C-UE 820 may perform an operation for sidelink communication. The Tx UE 810 may transmit explicit signaling for requesting the C-UE 820 for transmission of a coordination message required for resource selection. For example, the Tx UE 820 may transmit explicit signaling to the C-UE 820 for coordination message transmission at a point in time at which it is determined that a sidelink resource continuously collides or a resource selection is required. That is, the Tx LTE 810 may request the coordination message transmission to the C-UE 820. When the C-UE 820 receives explicit signaling, the C-LTE 820 may prepare a coordination message and may transmit the prepared coordination message to the Tx UE 810. The Tx UE 810 may perform a resource reselection procedure based on the coordination message received from the C-UE 820 and, through this, low latency requirements may be satisfied by preventing the above resource collision issue.

Here, when the C-UE 820 transmits the coordination message, the C-UE 820 may transmit the coordination message to the Tx LTE 810 based on at least one of a periodic method, an aperiodic method, and a semi-persistent method. For example, a coordination message transmission method may be pre-configured or may be indicated through additional signaling and is not limited to the aforementioned embodiment.

In the following, a method of delivering, by a C-UE, a resource coordination request message from a Tx LTE is described. Here, even a case of using a message transmission method (or a transmission format) based on the following resource coordination request message transmission method may also apply according to a format or a type of coordination information provided from the C-UE to the Tx UE.

For example, when the C-UE simply provides only coordination information (minimum information) on resource reselection or reevaluation to the Tx LTE, a size of a coordination information message may be similar to that of a coordination resource request message. Therefore, a transmission method or a transmission format for transmitting the coordination resource request may also apply to coordination information transmission. Hereinafter, although description is made with the assumption of the transmission method or format for the coordination resource request for clarity of description, it may apply to coordination resource information according to a format or a type of coordination resource information.

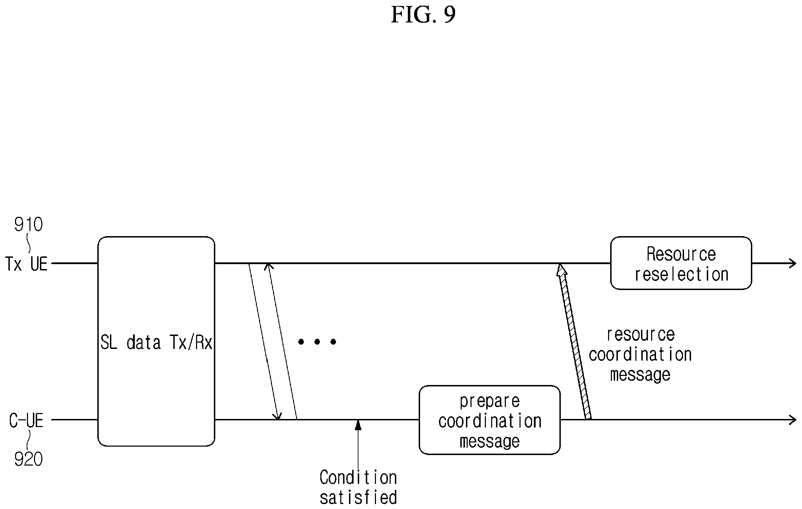

As another example, when a specific condition or a specific configuration is satisfied without explicit signaling of the Tx UE, the C-UE may perform the resource coordination procedure. Hereinafter, the specific condition or the specific configuration for the C-UE to perform the resource coordination procedure is described. FIG. 9 illustrates a condition-based resource coordination procedure performing method to which the present disclosure may apply. Referring to FIG. 9, a Tx UE 910 and a C-UE 920 may operate based on sidelink communication.

Here, the C-UE 920 may sense conditions that occur based on at least one of the aforementioned hidden node issue, half-duplex communication issue, and resource collision issue. When the C-UE 920 senses a case that the proposed condition/configuration is satisfied, the C-UE 920 may generate CM information and may transmit the CM information to the Tx LTE 910. The Tx LTE 910 may perform resource reselection based on the CM information. That is, when the specific condition is satisfied even without explicit signaling for a resource coordination procedure request from the Tx UE 910, the C-UE 920 may generate CM information and may transmit the CM information to the Tx UE 910. Here, the specific condition/configuration may be configured based on at least one of continuous collision detection, poor channel environment detection, and high CBR measurement and may be configured in other forms.

When the C-UE 920 transmits the CM information to the Tx UE 910, the C-UE may transmit the CM information to the Tx LTE 910 based on at least one of a periodic method, an aperiodic method, and a semi-persistent method.

In detail, for example, a triggering condition (or configuration condition) for the C-LTE 920 to generate and transmit CM information may be configured in consideration of each situation. Regarding the hidden node issue, when a resource collision is predicted or when a collision occurs as a result of verifying, by the C-LTE, an SCI format received from neighboring Tx LTE(s), it may be determined that the triggering condition is satisfied. That is, when the C-UE verifies resource reservation information and resource allocation information in the SCI format received from the neighboring Tx UEs and a resource collision between different Tx UEs is verified, the C-UE may generate and transmit CM information that includes information on the corresponding colliding resource.

As described above, a triggering condition for transmission of CM information and generation of CM information may include a case in which the C-UE receives CR information from the Tx UE or a case in which the C-UE senses a specific condition (or configuration/event) and determines that the specific condition is satisfied. That is, when the C-UE receives a CR from the Tx LTE or when the specific condition is satisfied, the C-LTE may generate CM information and transmit the CM information to the Tx UE. Hereinafter, a method of transmitting, by the C-UE, CM information based on a case in which a procedure for providing CM information is triggered is described based on the foregoing description.

Types of CM information providable from the C-LTE to the Tx LTE may be differently set. For example, a CM information type provided to the Tx UE may be predetermined between the Tx LTE and the C-UE. In detail, the Tx LTE and the C-UE may predetermine the CM information type through PC5-RRC signaling, pre-configuration, or an upper layer parameter from a base station. As another example, the Tx LTE and the C-UE may predetermine the CM information type through an upper layer parameter that is set through a unicast/groupcast session establishment procedure. As another example, the CM information type may be signaled to the C-LTE with a CR transmitted from the Tx UE. That is, the C-LTE may receive information on the CM information type that the Tx UE desires to receive with CR information. However, it is provided as an example only and the CM information type may be determined based on another method and is not limited to the aforementioned embodiment.

Here, the CM information type may be a set of resources selected or sensed by the C-UE. In detail, for example, when the C-LTE is an Rx UE, the CM information type may be information on a set of resources preferred (or recommended) for reception of the C-UE. As another example, the CM information type may be information on a set of resources non-preferred for reception of the C-UE. As another example, the CM information type may be a set of resources recommended for a UE (e.g., Rx UE) that is intended for sidelink transmission of the Tx UE. As another example, the CM information type may be resource set information unavailable by the UE (e.g., Rx UE) that is intended for the sidelink transmission of the Tx LTE. Here, to identify the C-UE that is a target of the resource set and the UE intended for the sidelink transmission of the Tx UE as CM information, ID information may be included in the CM information. That is, ID information of a UE that is the target of the resource set may be included in the CM information.

As another example, the CM information type may include entire sensing result information performed by the C-UE. That is, the C-UE may directly perform sensing and may transmit result information related thereto to the Tx LTE as CM information.

As another example, the CM information type may include information indicating reselection of a reserved resource or information indicating abandonment of the reserved resource. In detail, when a collision occurs or is predicted in a specific resource used by the Tx UE, the C-LTE may include, in CM information, information indicating reselection of the corresponding resource or abandonment of the reserved resource and may transmit the same to the Tx UE. The Tx UE may verify the CM. information and may reselect the resource or may abandon the corresponding resource.

Also, the Rx LTE (particularly, power-limited LTE) may perform simultaneous PSFCH transmission with respect to a plurality of Tx UEs. Here, the power-limited Rx UE may have constraints in performing the simultaneous PSFCH transmission with respect to the plurality of Tx UEs. Considering this, the C-LTE may request modification of PSSCH transmission resources to avoid a case in which PSFCH needs to be simultaneously transmitted to the plurality of Tx UEs. That is, for the aforementioned purpose, CM information may include information indicating reselection of the corresponding resource or abandonment of the reserved resource.

Also, for example, the CM information type may include at least one of interference information, channel measurement information, and location information (geo-location). That is, as information related to resource selection, the CM information may include at least one of channel state information measured by the C-UE (e.g., SL-RSRP, SL-RSSI, or SL-RLF), channel congestion information (e.g., CBR), channel occupancy information (Channel occupancy Ratio (CR)), and geo-location information (e.g., zone ID, communication range). The Tx UE may receive CM information that includes the aforementioned information from the C-LTE and may perform resource selection by considering the aforementioned information when selecting a resource.

Here, for example, the resource set may be one of previous and current resources. Also, the CM information type may be determined based on at least one combination of the aforementioned CM types (resource set information type or resource selection-related information type). That is, the CM information may include all of the aforementioned resource set information type and resource selection-related information type or may include only one thereof. For example, whether to use the CM information type may be indicated through physical layer or upper layer signaling. Also, whether to support each of the aforementioned types may be provided through upper layer signaling that includes UE capability signaling.

Then, resource allocation may be required for the aforementioned CM information transmission. That is, for the C-UE to transmit CM information to the Tx LTE, a resource for CM information transmission may need to be determined. Here, the resource for CM information transmission may be determined through resource sensing by the C-UE. That is, the C-UE may sense a resource for CM information transmission and may transmit the CM information to the Tx UE as the sensed resource.

As another example, a dedicated resource for the C-UE to transmit CM information may be used. In detail, for example, a specific resource related to a CR reception resource may be used as a dedicated resource for CM information transmission. That is, the C-UE may verify a resource used for the Tx LTE to transmit a CR and, based thereon, may transmit CM information to the Tx UE through an associated specific resource. Through this, the Tx UE may determine a CR transmission resource and may recognize a resource used to transmit the CM information, and may receive the CM information through the dedicated resource without separate signaling. For example, as described above, the dedicated resource may be associated with a specific resource within a specific resource pool (e.g., dedicated RP for reporting CM) or within a single resource pool and the present disclosure is not limited to the aforementioned embodiment.

Hereinafter, a method of sensing, by a C-LTE, a transmission resource for CM transmission and determining a resource and a method of using a dedicated resource are described.

For example, the C-UE may determine a transmission resource for CM transmission through sensing. When the C-UE receives a CR from the Tx UE or when it is verified that a specific condition (or event) is satisfied, an upper layer and/or a physical layer of the C-UE may trigger a procedure for determining at least one of a CM transmission resource and coordination information. Here, when the C-LTE senses a resource for CM transmission and transmits CM information to the Tx LTE through the sensed resource, at least one of a sensing window, a CM transmission window, and a CM transmission slot may be determined based on a reference point in time at which the procedure is triggered. For example, the reference point in time may be defined based on at least one of a slot, an OFDM symbol, and a radio frame of the physical layer. Here, when the reference point in time at which the procedure is triggered is slot n, at least one of the sensing window, the CM transmission window, and the CM transmission slot may be determined based on slot n. Also, for example, parameter information that may be provided for the aforementioned procedure may be provided from an upper layer of a LTE and/or a Tx LTE that desires to receive coordination information.

Here, a case in which the C-UE receives a CR from the Tx LTE and triggers a corresponding procedure may be considered as a case of determining a resource pool and/or a CM transmission resource for CM transmission. For example, the resource pool for CM transmission may be the same as a resource pool used to receive CR information. As another example, it may be a case in which a resource pool in which CM transmission is allowed is pre-configured for an inter-UE coordination procedure between the Tx UE and the C-UE. As another example, preferred resource pool indication information may be included in CR information transmitted from the Tx UE. Here, the resource pool for CM transmission may be determined based on resource pool indication information included in CR information. That is, although the resource pool for CM transmission may be determined based on the resource pool used to receive CR information or the resource pool indicated by the CR information, the present disclosure is not limited to the aforementioned embodiment.

As another example, a case in which the C-UE triggers a CM transmission procedure depending on whether a specific condition (or event) is satisfied may be considered as a case of determining a resource pool for CM transmission and/or CM transmission resource. Here, the C-UE may generate CM information based on resource pool information provided through an upper layer and may perform a transmission procedure.

Also, for example, the C-UE may consider a case of selecting a CM transmission resource and/or priority (L1 priority, *prio_Tx* (of Tx LTE)) of sidelink data/coordination information that the Tx UE/C-UE is to transmit for CM information generation. Here, a case of determining a resource pool for CM transmission and/or CM transmission resource and/or a case in which the C-UE receives a CR from the Tx UE and triggers a CM information generation procedure may be considered. Here, the C-UE may apply L1 priority information of data to be transmitted from the Tx UE within CR information received from the Rx UE as priority for the CM transmission resource. For example, when the priority information is absent in CR information, the C-UE may assume arbitrary specific priority predetermined or configured for CM transmission resource selection and may apply the same. For example, although arbitrary specific priority may be top priority or bottom priority, the present disclosure is not limited to the aforementioned embodiment.

On the contrary, a case of determining a resource pool for CM transmission and/or CM transmission resource and/or a case in which the C-UE triggers a CM transmission procedure depending on whether a specific condition (or event) is satisfied may be considered. Here, the C-UE may assume and apply arbitrary specific priority for CM transmission resource selection. For example, although the arbitrary specific priority may be top priority or bottom priority, the present disclosure is not limited to the aforementioned embodiment.

Also, for example, the C-UE may consider remaining packet delay budget information of the Tx UE for CM information generation (e.g., CM type) and/or a case of selecting a CM transmission resource. Here, the remaining packet delay budget information may be considered to select a start/end point in time of a sensing window or a selection window related to CM transmission time. For example, when a remaining packet delay budget of the C-UE/CUE is sufficient, the selection window may be set to be larger. On the contrary, when the remaining packet delay budget of the Tx/C-LTE is insufficient, the C-UE may need to quickly transmit CM information and thus a size of the selection window may be reduced. In particular, the end point time of the selection window may be affected. That is, the information may affect a window configuration related to the CM transmission resource.

Here, a case in which the C-UE receives a CR from the Tx LTE and triggers a corresponding procedure may be considered as a case of determining a resource pool for CM transmission and/or CM transmission resource may be considered. Here, the C-UE may apply remaining packet delay budget information to be transmitted from the Tx LTE within CR information received from the Tx LTE as a packet delay budget for the CM transmission resource. For example, when the information is absent within the CR information, the C-UE may assume and apply the remaining packet delay budget for selection of the CM transmission resource. For example, although the arbitrary specific remaining packet delay budget may be top priority or bottom priority, the present disclosure is not limited to the aforementioned embodiment.

On the contrary, a case in which the C-UE triggers a CM transmission procedure depending on whether a specific condition (or event) is satisfied may be considered as a case of determining a resource pool for CM transmission and/or CM transmission resource. Here, the C-UE may assume and apply an arbitrary remaining packet delay budget for selection of the CM transmission resource. For example, although the arbitrary specific remaining packet delay budget may be top priority or bottom priority, the present disclosure is not limited to the aforementioned embodiment.

Also, the Tx UE may provide the C-UE with the number of SL MAC PDUs to be transmitted and reserved transmission period information related thereto as information available within a procedure for CM information generation. Also, for example, when a CM transmission format is based on PSSCH/PSCCH (including $2^{nd}$ SCI), the C-LTE may receive a time for CM transmission (slot and OFDM symbol) and a frequency resource (number of subchannels/number of PRBs of PSSCH/PSCCH) and may perform CM transmission based thereon. Also, for example, when the upper layer requests the C-UE to perform a "re-valuation" or "pre-emption" procedure, the upper layer may provide a set of previously selected resources and the C-UE may perform CM transmission based thereon. Also, for example, the C-UE may transmit resource (re)selection, resource selection abandonment, and/or "pre-emption" indication information to the Tx UE as a single type of CM information. Here, the CM information may be indication information and may not have a large size. For example, whether to perform (re)selection (e.g., 1bit) or whether to perform abandonment of resource selection (e.g., 1 bit) may be indicated based on a small number of bits. That is, a CM information type having a relatively small number of information bits may be considered based on the information. As a result, the CM information types ((e.g., PSFCH and SCI format ($1^{st}$ or $2^{nd}$ SCI format)) may be transmitted through physical layer channel and signaling.

Also, for example, as described above, the C-UE may recognize that triggering for CM generation for the Tx LTE occurs at a specific point in time (e.g., radio frame, slot, OFDM symbol). Here, when the C-UE determines a CM transmission resource based on resource sensing, a CM sensing window for resource sensing may be determined based on the specific point in time. For example, when the specific point in time is slot n that is a reference slot, the CM sensing window may be determined based on a reference slot. In detail, the CM sensing window that considers a start point in time a and an end point in time b may be determined with slot/symbol range having the range of [n-a, n-b). That is, the start point in time and the end point in time b may be determined based on the triggering reference point in time. As another example, the start point in time a and the end point in time b may be determined based on a sum of the triggering point in time (or CR reception time) and a time for processing and the present disclosure is not limited to the aforementioned embodiment. Here, the start point in time a and the end point in time b may have different values according to subcarrier spacing (SCS). As another example, a and b may be set by the upper layer parameter.

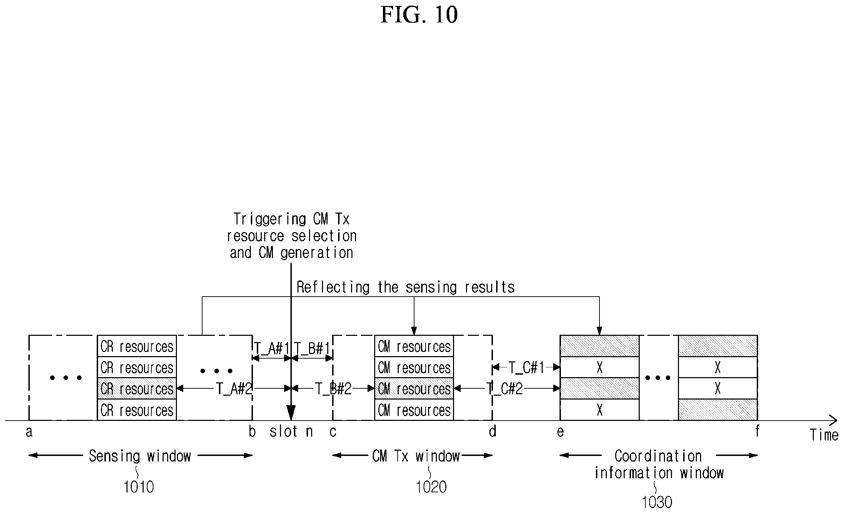

For example, FIG. 10 illustrates a window setting method based on CR reception to which the present disclosure may apply. Referring to FIG. 10, the C-UE may receive a CR from the TX LTE and may trigger a procedure for CM transmission. Here, since triggering occurs based on CR reception, the upper layer may indicate a resource selection procedure for determining a sensing window 1010, a CM transmission window 1020, and CM information based on slot n in consideration of a processing time (i.e., T_A#2) within the C-LTE for CR reception. That is, the C-UE may determine a time after T_A#2 from a point in time at which the CR is received in the CM transmission procedure as a reference point in time for CM transmission resource selection and CM generation. Here, the upper layer of the C-LTE may indicate triggering in slot n to the physical layer.

Here, as described above, the range of the sensing window 1010 may be determined based on a slot and/or symbol unit having the range of [n-a, n-b) based on the reference point in time (i.e., slot n) for triggering the resource selection procedure. For example, when the C-UE receives a CR, the C-UE may decode the received CR and may report information related thereto to the upper layer. Then, the upper layer of the C-LTE may trigger CM information transmission in slot n and the corresponding point in time may be the reference point in time for triggering. Here, for example, a value of b to be reported to the upper layer may be the same as that of T_A#1. It may correspond to a processing time for the C-UE to process SCI of other UEs received during a sensing process. Also, a value of b may be determined by considering an SCS value based on a slot/symbol unit. Also, a value of a may be determined based on upper layer configuration or may be fixed to a specified value (e.g., 1000 ms). For example, after succeeding in receiving a CR, the upper layer of the C-LTE may need to quickly trigger the procedure for CM transmission resource selection and CM information generation with respect to the physical layer. Considering this, T_A#1 and T_A#2 may be determined as the same value. That is, only a single time variable may be considered.

Also, for example, the CM transmission window (CM Tx window) 1020 may be a resource selection window for determining a CM transmission resource for transmitting CM information. Here, the CM transmission window 1020 may be determined as the range of [n+c, n+d] based on the reference point in time (i.e., slot n). Here, a value of c may be determined in consideration of SCS values and a processing time of the UE. Also, a value of d may be determined as a smaller value than a packet delay budget (PDB) in consideration of PDB for the Tx UE or may be determined through the upper layer.

Also, a coordination information window (CIW) 1030 to which coordination information, i.e., a set of resources for inter-UE coordination to be included in CM is applied may be determined as [slot e, slot f] based on the CM transmission window 1020 or a CM transmission resource slot. That is, the CIW 1030 may start after a T_C#1 slot based on a last slot (slot d) of the CM transmission window 1020. As another example, start of the CIW may be determined based on slot n that is the reference point in time. Also, as discussed above, a last slot (slot f) of the CIW 1030 may be determined based on a PDB of the Tx UE/C-UE.

Also, a start point in time and an end point in time of the resource selection window (i.e., CIW 1030) corresponding to CM information may be determined by an upper layer parameter in consideration of a transmission and reception time, a processing time of a LTE (from C-LTE to Tx LTE) and PDB of Tx UE/C-UE. Also, the CIW 1030 and the CM transmission window may be determined by further considering an SCS value. That is, a timing of the window or a timing between resources and a start point in time and an end point in time of the corresponding window may be determined in consideration of a processing time of the LTE and a transmission and reception propagation delay time, and a PDB and/or SCS of the Tx UE/C-UE based on the triggering reference point in time.

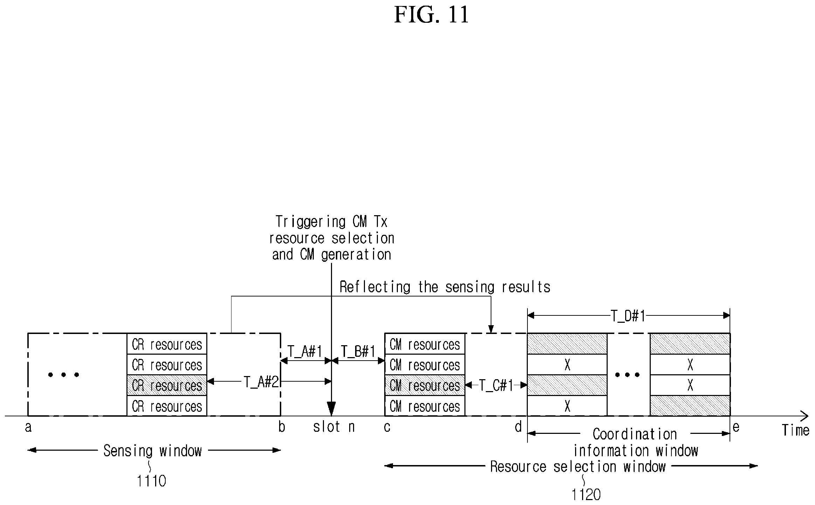

As another example, FIG. 11 illustrates a window setting method based on CR reception to which the present disclosure may apply. Referring to FIG. 11, a triggering reference point in time for CM transmission resource selection and CM generation may be the same as that of FIG. 10. That is, when the C-UE receives a CR from the Tx LTE, the triggering reference point in time may be determined in consideration of a processing time of CR reception. That is, the sensing window 1110 may be determined as [n-a, n-b] based on slot n in consideration of the triggering reference point in time. Here, for example, a CM transmission window and a window for coordination information (CIW) may be determined as a single resource selection window 1120. That is, the CM transmission window and the window for coordination information (CIW) may be determined as a single resource selection window 1120 without separately configuring the CM transmission window. For example, when the upper layer indicates and triggers CM transmission to the physical layer at the triggering reference point in time (slot n), slots from slot c (i.e., time of slot n+T_B#1) to slot e may be determined as a single resource selection window 1120. Here, a time window length (T_D#1) for coordination information within a single resource selection window 1120 may be determined by a PDB of the Tx UE and a processing time of the C-UE.

For example, for the C-UE to quickly feedback CM information to the Tx UE, it may be preferred to quickly select a CM transmission resource within the window. Therefore, transmission may be performed by generating coordination information within a CIW time corresponding to a T_D#1 slot length for CIW by (slot d) after a T_C#1 slot in a CM transmission resource (slot e) (here, a T_C#1 slot value may be pre-configured or determined or may be determined by the C-UE and indicated by a CM transmission format (e.g., SCI format or PSSCH or DMRS or scrambling)) and by including the generated coordination information in a CM. That is, the CM transmission window and the window for coordination information may be determined as individual windows (FIG. 10) or may be determined as a single window (FIG. 11). However, the present disclosure is not limited to the aforementioned embodiment.

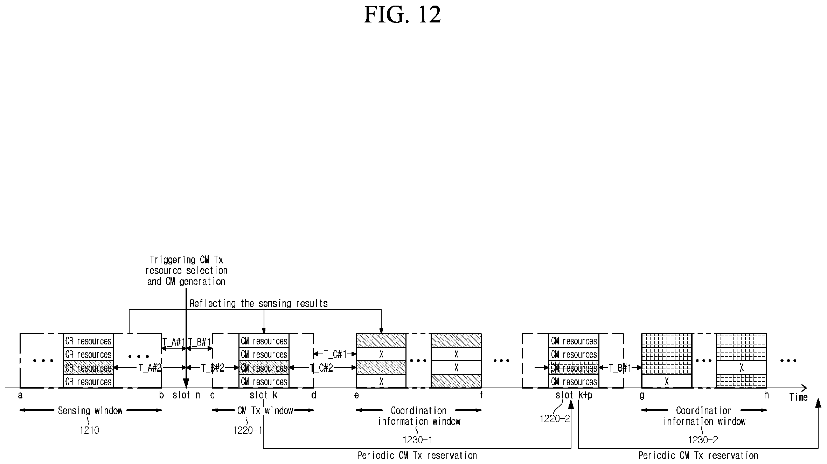

As another example, FIG. 12 illustrates a window setting method based on CR reception to which the present disclosure may apply.

Referring to FIG. 12, a case in which CM transmission is performed through PSSCH/PSCCH may be considered. Here, in the case of performing CM transmission in slot k, a slot resource corresponding to a next slot k+P may be reserved through 1st SCI that is transmitted through PSSCH or 2nd SCI that is transmitted through the PSSCH, based on slot k. In detail, by reserving in advance a CM transmission resource corresponding to a next period through a resource reservation period value within a 1st SCI format, it is possible to minimize a required time delay in selecting the CM transmission resource. That is, unless a "pre-emption" procedure or a resource reevaluation procedure is triggered for resources reserved for transmission in the slot k+P based on a period P, time delay may be minimized by performing CM transmission without performing an unnecessary resource selection procedure.

Here, P may denote a periodicity value. A list of periodicity values may be configured through PC5-RRC/MAC signaling (in the case of unicast) by the Tx UE and the C-UE or through a pre-configured parameter or base station upper layer signaling. Also, for example, the Tx UE may indicate a single P value to the C-UE through one of 1st SCI and 2nd SCI. Also, in the case of groupcast, a value of P may be determined based on a groupcast session establishment procedure or a list of periodicity values preset for each resource pool. However, the present disclosure is not limited to the aforementioned embodiment.

Based on the aforementioned description, in FIG. 12, a sensing window 1210 may be determined based on a triggering reference point in time (slot n) based on CR reception. Also, a CM transmission window 1220-1 may be determined as slot k based on a reference point in time (slot n) and a coordination information window 1230-1 may also be determined accordingly. Also, a CM transmission window 1220-2 may be determined as slot k+P based on the period P and a coordination information window 1230-2 may be determined based thereon. Also, for example, when the CM transmission window and the coordination information window are configured as a single resource selection window, a CM resource may be periodically reserved based on the period P. However, the present disclosure is not limited to the aforementioned embodiment.

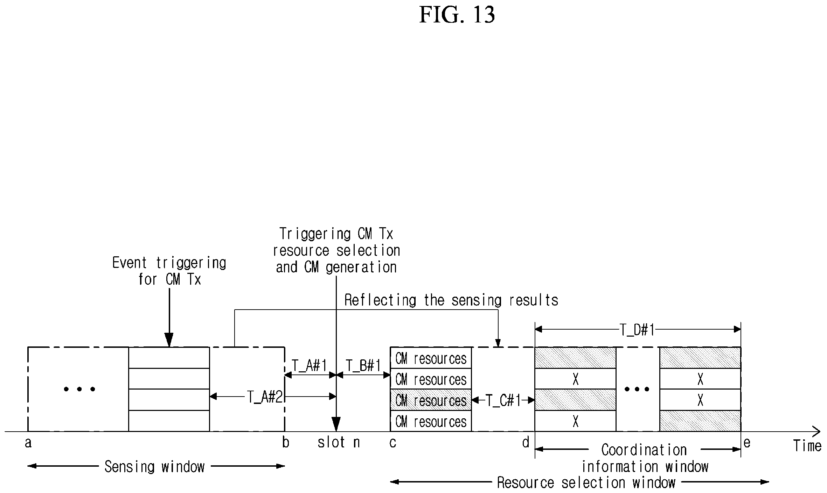

FIG. 13 illustrates a window setting method based on event-based triggering to which the present disclosure may apply.

As described above, the C-LTE may receive a CR from the Tx LTE and, based thereon, may trigger a CM resource selection and CM generation procedure. Also, for example, the C-UE may trigger the CM resource selection and CM generation procedure depending on whether a specific condition (or event) is satisfied. For example, referring to FIG. 13, when the C-UE recognizes that the specific condition (or event) is satisfied and triggers the CM resource selection and CM generation procedure, the upper layer of the C-UE may indicate the physical layer to perform a procedure related to CM transmission resource and CM generation. Here, a triggering reference point in time may be determined based on at least one of a radio frame, a slot, and an OFDM symbol. Here, when the triggering reference point in time is determined, a sensing window, a CM transmission resource window, and a CIW may be determined based on the methods described above with reference to FIGS. 10 to 12. That is, as described above, the C-UE may determine a point in time after a certain period of time from an event sensing point in time as the triggering reference point in time in consideration of a processing time, as in a CR reception point in time, and based thereon, may determine a sensing window and a resource selection window or a CM resource selection window/CIW.

As another example, the C-UE may consider a case of using a dedicated resource for CM transmission. That is, the C-LTE may not perform a procedure of selecting a resource for CM transmission.

As described above, delay may occur when the C-UE performs an operation of determining a CM transmission resource. Here, to minimize the delay, the Tx LTE and the C-LTE may perform CM transmission based on a pre-configured CM resource or a reserved CM transmission resource. That is, the C-LTE may use a resource dedicated for CM transmission and, through this, may minimize the delay. That is, the C-LTE may have a resource set for CM transmission before performing the sensing process.

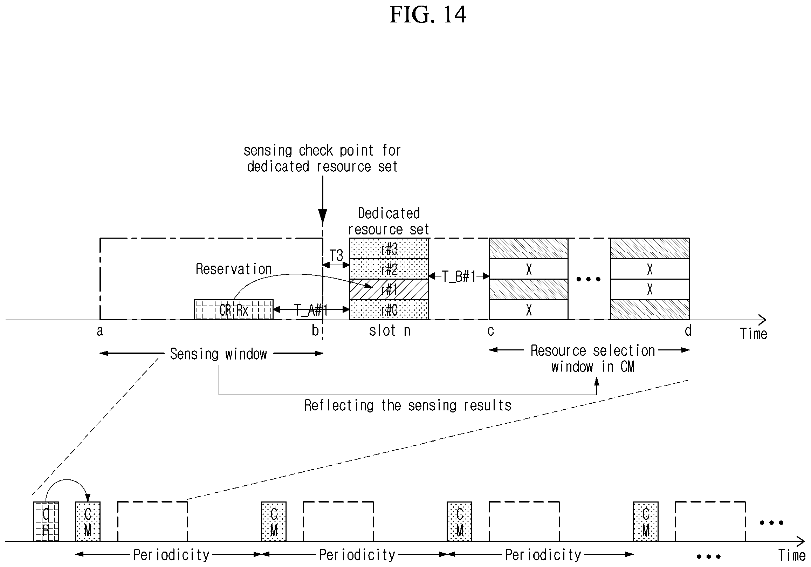

Here, for example, FIG. 14 illustrates a dedicated resource-based window setting method to which the present disclosure may apply.

Referring to FIG. 14, the Tx UE and the C-UE may predetermine a set of dedicated time/frequency resources for CM transmission (e.g., r#0, r#1, r#2, r#3...) through upper layer configuration. In particular, set information of resources on a frequency domain may be pre-configured. In detail, a dedicated resource may be configured based on the number of subchannels (sub-CH) or physical resource blocks (PRBs) on a CM transmission resource area based on upper layer configuration for the CM transmission resource area. That is, a frequency domain for a dedicated resource may be determined based on a subchannel or a PRB. Also, time/frequency domain resources may be determined based on resource information on a time included in a CR received by the C-UE from the Tx-UE. Also, for example, resource information on the time may not be defined in the CR received by the C-UE from the Tx UE. Here, the CM transmission time resource may be pre-configured. In detail, for example, the Tx UE and the C-UE may predetermine the CM transmission time resource based on PC5-RRC signaling and the present disclosure is not limited to the aforementioned embodiment. As another example, the CM transmission resource of the C-LTE may be indicated through a time/frequency resource field/resource reservation field within the CR. As another example, the CM transmission time resource may be predetermined based on a semi-static method and the present disclosure is not limited to the aforementioned embodiment.

Here, the C-UE may verify a sensing check point for a dedicated resource set based on the CR transmitted from the Tx LTE. Here, the C-LTE may verify resource reservation information or resource allocation information (e.g., r#1) for CM transmission within CR information received from the Tx LTE. That is, the Tx LTE may provide reserved resource and resource allocation information for CM transmission to the C-UE. Here, the C-UE may determine the dedicated frequency resource set as the sensing check point based on slot timing information (e.g., CR reception slot+T_A#1) corresponding to a certain time (e.g., T_A#1) based on the CR reception slot. Then, the C-UE may recognize a single resource among resources within a set of dedicated frequency resources as a candidate CM transmission resource. Here, when periodic CM transmission is indicated in advance through CR or upper layer signaling, the C-UE may periodically perform CM transmission. On the contrary, unless the periodic CM transmission is pre-configured through upper layer signaling, the C-UE may perform aperiodic (one-time) CM transmission based on CR reception.

Also, for example, the C-UE may determine whether to finally use the indicated candidate CM transmission resource. Here, the C-UE may use a candidate CM transmission resource after at least T3 time slot value from the sensing check point for the dedicated resource. Also, for example, the T3 time slot value may be differently set depending on LTE implementation and the present disclosure is not limited to the aforementioned embodiment. That is, the C-UE may determine whether to finally use the corresponding resource based on the time through an operation of sensing the candidate CM transmission resource indicated by the Tx UE, which may be reported from the physical layer to the upper layer.

As another example, the C-LTE may not receive instruction on a CM resource based on a CR received from the Tx LTE. That is, the C-LTE may transmit a CM through a periodic or aperiodic resource based on frequency resource set information and a slot timing value predetermined based on upper layer signaling or SCI signaling.

As another example, a CM transmission resource index may be induced based on a slot index and/or subchannel index/RB indexes of the CR resource received by the C-UE. For example, a resource to be used by the C-UE from a set of available candidate CM transmission resources may be determined based on the slot index and/or subchannel index/RB indexes of the received CR resource.

As another example, the operation based on FIG. 14 may be equally applied even when the CUE recognizes that a specific condition (or event) is satisfied. That is, when the C-UE recognizes that the specific condition is satisfied instead of receiving the CR, the C-UE may perform CM transmission through the dedicated resource and may operate in the same manner as described above. Here, for example, the CR resource slot index may be a slot index that is verified to be triggered since a specific condition (or event) is satisfied and, based thereon, may operate in the same manner as described above.

Also, for example, types of CM information that may be provided from the C-UE to the Tx-UE may be differently configured. For example, a CM information type provided to the Tx UE may be coordinated in advance between the Tx UE and the C-UE. In detail, the Tx UE and the C-UE may predetermine the CM information type through PC5-RRC signaling, pre-configuration, or physical layer signaling (e.g., SCI format). As another example, the Tx UE and the C-UE may predetermine the CM information type through an upper layer parameter that is set through a unicast/groupcast session establishment procedure. As another example, the CM information type may be signaled to the C-UE with the CR transmitted from the Tx UE. That is, the C-UE may receive information on the CM information type that the Tx UE desires to receive with CR information. However, it is provided as an example only and the CM information type may be determined based on another method and is not limited to the aforementioned embodiment.

Here, the CM information type may be a set of resources selected or sensed by the C-UE (hereinafter, CM information type 1). In detail, as an example for CM information type 1, when the C-LTE is an Rx UE, the CM information type 1 may be information on a set of resources preferred (or recommended) for reception of the C-UE. As another example, the CM information type 1 may be information on a set of resources non-preferred for reception of the C-UE.

As another example, the CM information type 1 may be a set of resources recommended for a UE (e.g., Rx UE) that is intended for sidelink transmission of the Tx UE. As another example, the CM information type 1 may be resource set information unavailable by the UE (e.g., Rx UE) that is intended for sidelink transmission of the Tx UE. Here, to identify the C-UE that is a target of the resource set and the UE intended for the sidelink transmission of the Tx UE as CM information, ID information may be included in the CM information. That is, ID information of the UE that is the target of the resource set may be included in the CM information.

As another example, the CM information type 1 may include entire sensing result information performed by the C-UE. That is, the C-UE may directly perform sensing and may transmit result information related thereto to the Tx UE. That is, the CM information type 1 may be information on a set of resources and the Tx LTE may perform resource reselection or abandonment of the reserved resource based on information on the set of resources.

Also, for example, the CM information type may include at least one of interference information, channel measurement information, and location information (geo-location) (hereinafter, CM information type 2). That is, as information related to resource selection, the CM information may include at least one of channel state information measured by the C-UE (e.g., SL-RSRP, SL-RSSI, or SL-RLF), channel congestion information (e.g., CBR), channel occupancy information (Channel occupancy Ratio (CR)), and geo-location information (e.g., zone ID, communication range). The Tx UE may receive CM information that includes the aforementioned information from the C-UE and may perform resource selection by considering the aforementioned information when selecting a resource.

As another example, the CM information may be information indicating reselection of the reserved resource or information indicating abandonment of the reserved resource (hereinafter, CM information type 3). In detail, when a collision occurs or is predicted in a specific resource used by the Tx UE, the C-UE may indicate reselection of the corresponding resource or abandonment of the reserved resource to the Tx UE based on the CM information type 3. The Tx UE may verify the CM information type 3 and may reselect the resource or may abandon the corresponding resource.

Also, the Rx LTE (particularly, power-limited LTE) may perform simultaneous PSFCH transmission with respect to a plurality of Tx UEs. Here, the power-limited Rx UE may have constraints in performing the simultaneous PSFCH transmission with respect to the plurality of Tx UEs. Considering this, the C-LTE may request modification of PSSCH transmission resources to avoid a case in which PSFCH needs to be simultaneously transmitted to the plurality of Tx UEs. That is, for the aforementioned purpose, CM information type 3 may include information indicating reselection of the corresponding resource or abandonment of the reserved resource.

Here, for example, the resource set may be one of previous and current resources. Also, the CM information type may be determined based on at least one combination of the aforementioned CM types (CM information type 1, CM information type 2, and CM information type 3). That is, the CM information may include all of the aforementioned resource set information type, resource selection-related information type, and resource reselection/abandonment indication information type or may include only one thereof. For example, whether to use the CM information type may be indicated through physical layer or upper layer signaling. Also, whether to support each of the aforementioned types may be provided through upper layer signaling that includes UE capability signaling.

For example, the CM information type 1 may be information on the resource set. Here, a signaling format for indicating the resource set may be determined. The C-UE may determine a set of resources (Set $S_A$, set of resources) as the CM information type 1 and may transmit information related thereto to the Tx UE.

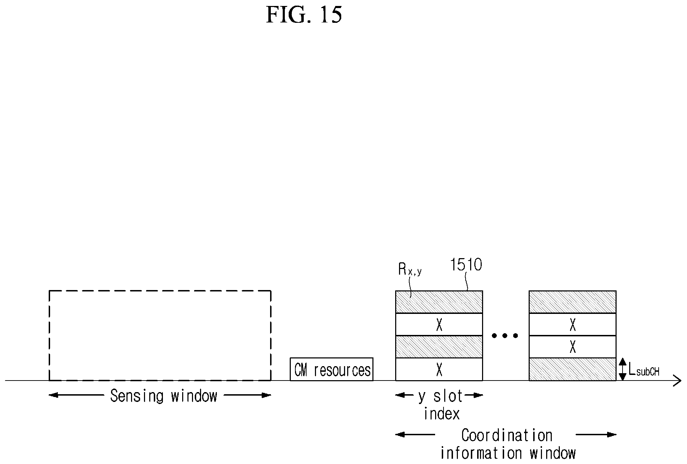

Here, a resource window section (i.e., CIW) related to coordination information to be included in the CM information may be the same as described above. Here, in the CIW, candidate single-slot resource 1510 ($R_{x,y}$) may be configured based on a set of $L_{subCH}$ consecutive subchannels. That is, a frequency domain of one candidate single-slot resource may include a set of $L_{subCH}$ consecutive subchannels. For example, referring to FIG. 15, x of one candidate single-slot resource ($R_{x,y}$) may denote an index for the set of $L_{subCH}$ consecutive subchannels. Also, y may denote a slot index. Therefore, the entire candidate single-slot resource 1510 ($R_{x,y}$) may be indicated based on a slot index within a time down of the CIW and may be indicated based on an index for a set of $L_{subCH}$ consecutive subchannels in a frequency domain. Therefore, the C-UE may determine Set $S_A$ that is a set of available candidate resources among the entire candidate-single slot resource 1510 ($R_{x,y}$) within the CIW through a sensing procedure. Then, the physical layer of the C-UE may report the determined Set $S_A$ to the upper layer and, based thereon, may perform CM information transmission. Subsequent transmission may be performed through the physical layer based on CM information generated through reporting of the physical layer to the upper layer. For example, a threshold ($Th(p_i)$) for the Set $S_A$ may be determined based on a combination (i.e., SL-ThresRSRP_pi_pj) of transmission priority ($p_j$) of the Tx LTE and priority ($p_i$) of the C-UE. As another example, the threshold ($Th(p_i)$) for the Set $S_A$ may be determined based on an upper layer parameter (i.e., SL-ThresRSRP_pk) as an SL RSRP threshold corresponding to priority ($p_k$) defined for CM transmission. As another example, the threshold ($Th(p_i)$) for the Set $S_A$ may be set using a single value among combinations (i.e., SL-ThresRSRP_pi_pk) of priority ($p_k$) defined for CM transmission and priority ($p_i$) received by the C-UE. For example, when 4 priority values are defined respectively as a case in which $P_k$ = 0 to 3 and $P_i$ = 0 to 3, the threshold ($Th(p_i)$) may be selected as a value associated with each of a maximum of 16 combinations. Initialization for the Set $S_A$ may be performed based on a set having all candidate-single resources $R_{x,y}$ in the CM transmission window.

Set $S_A$ may be determined by excluding an arbitrary candidate-single resource. In detail, when the C-UE does not perform monitoring in a single slot in the sensing window, the C-UE may exclude any candidate single resources that overlap all the subchannel resources in available reservation slots associated with all reservation values (e.g., configured through the upper layer) indicatable in a resource reservation period field within an SCI format that may be received in the corresponding slot. For example, when the corresponding slot is a slot for performing transmission, the C-UE may not perform monitoring in the corresponding slot. In this case, the C-UE may exclude all the resources in available reservation slots associated with all reservation values indicatable in the resource reservation period field within the SCI format.

Also, for example, when the C-UE receives the SCI format that includes the resource reservation field and/or resource allocation information field in a single slot and data priority ($prio_{RX}$) indicated by the corresponding SCI format is indicated based on the priority field, the C-UE may verify whether an RSRP measurement value for the SCI format is greater than the threshold ($Th(prio_{RX})$) acquired by the threshold determination method. That is, whether SCI is valid may be verified. Here, when the RSRP measurement value for the SCI format is greater than the threshold ($Th(prio_{RX})$) acquired by the threshold determination method, the C-UE may exclude all or some candidate single resources from the Set $S_A$ with respect to resources in which resource reservation information indicated in the resource reservation information field within the received SCI overlaps the single candidate resource $R_{x,y}$ (including the Tx UE's transmission period reservation information ($R_{x,y+j*P_{rsvp\_Tx}}$) and/or resource for CM transmission (including periodic resource ($R_{x,y,CM+j*P_{rsvp\_CM}}$)) within the CIW.

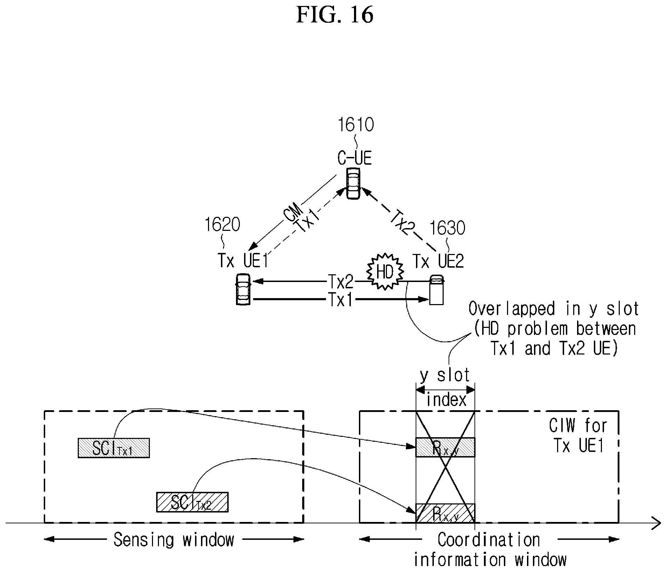

Also, for example, FIG. 16 illustrates a method of solving a duplex issue to which the present disclosure may apply.

Referring to FIG. 16, a C-UE 1610 may transmit CM information to a first Tx UE (Tx UE1) 1620. Here, a case in which a transmission priority value of a second Tx UE (Tx UE2) 1630 is greater than a transmission priority value of a Tx LTE (e.g., Tx1_priority < Tx2_priority), that is, a case in which the Tx UE2 1630 has relatively higher priority may be considered. Here, for example, the Tx LTE2 1630 may be a LTE that performs transmission and reception for sidelink data communication with the Tx UE1 1620. Here, all the single candidate resources within a slot in which a resource reserved by the Tx LTE2 1630 for transmission and an arbitrary candidate single resource (including the Tx LTE's transmission period reservation information ($R_{x,y+j*P_{rsvp\_Tx}}$) and/or resource for CM transmission (including periodic resource ($R_{x,y,CM+j*P_{rsvp\_CM}}$)) within the candidate CIW overlap may be excluded from Set $S_A$. Here, the Tx UE2 1630 may not have coordination relationship with the C-UE 1610.

Also, the C-UE 1610 may verify information on sidelink data transmission and reception between the Tx UE1 1620 and the Tx UE2 1630 through a destination ID and a source ID within an SCI format mutually exchanged. Here, the C-UE 1610 may verify whether Tx transmission and reservation between the Tx UE1 1620 and the Tx UE2 1630 are present in the same slot based on the ID information. For example, the C-UE 1610 may verify SCI of the Tx UE1 1620 and SCI of the Tx UE2 1630 and may verify resource information indicated thereby within the CIW. Here, when transmission of the Tx UE1 1620 and transmission of the Tx LTE2 1630 are simultaneously performed in the same slot as shown in FIG. 16, a transmission slot of one of two UEs needs to be changed with another slot. Through this, a half-duplex issue may be solved.

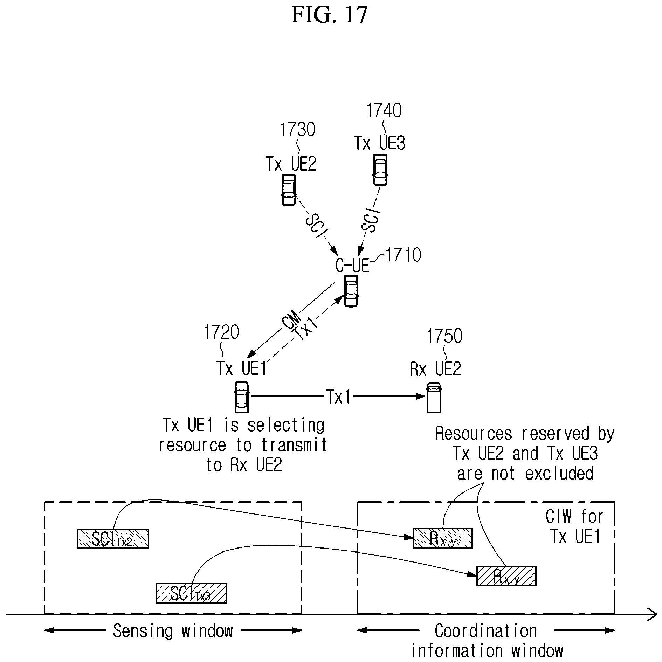

FIG. 17 illustrates a method of selecting a resource based on a C-UE to which the present disclosure may apply.

Referring to FIG. 17, a C-UE 1710 may use information on zone ID/communication range requirements that is information on location and distance measurement within received SCI. Here, although the received SCI is greater than the set SL-RSRP threshold, the C-UE 1710 may not consider all the SCI received through the procedure for resource exclusion.

For example, coordination information provided from the C-UE 1710 may be information to be used for a resource selection procedure process of a Tx UE1 1720. Here, the Tx UE1 1720 and the C-UE 1710 may have different neighboring channel environments and traffic loading levels. Therefore, the C-UE 1710 may need to generate coordination information that considers the Tx UE1 1720.

In detail, for example, the C-UE 1710 may verify information on zone ID/communication range requirements within the received SCI. Here, additionally, although a single candidate resource within the CIW is overlapped based on SL RSRP values for the corresponding received SCI, the C-UE 1710 may not perform resource exclusion based on location information of the corresponding SCI.

For example, the C-UE 1710 may acquire location information of the Tx UE from the Tx UE1 1720. Also, the C-UE 1710 may acquire location information of an Rx UE 1750 to which the Tx UE1 1720 is to transmit data based on ID information. Also, for example, the C-UE 1710 may acquire location information of UEs (Tx UE2 1730 and Tx UE3 1740) around the C-UE based on SCI format reception. Here, the C-UE 1710 may induce the location information and/or SL RSRP value within the SCI received from the neighboring UEs (Tx UE2 1730 and Tx UE3 1740) as well as the Tx UE1 1720 and the Rx UE 1750. Then, the C-UE 1710 may determine whether a reserved resource within SCI of other UEs (Tx UE2 1730 and Tx UE3 1740) received by the C-UE 1710 needs to be considered within CM information for the Tx UE (or needs to be excluded) based on the induced location information and SL RSRP value, based on zone ID/communication range requirements and/or SL RSRP information. In detail, for example, in FIG. 17, the Tx LTE2 1730 and the Tx UE3 1740 may not affect transmission of the Tx UE1 1720. Therefore, the C-UE 1710 may verify zone ID/communication range requirements for the Tx LTE2 1730 and the Tx LTE3 1740 and may determine the Set $S_A$ without performing resource exclusion based on the threshold.

As another example, a case in which a C-UE is a mode 1 UE may be considered. That is, the C-UE may be a UE that receives scheduling by a base station. Here, a Tx UE may be a mode 2 UE. For example, the C-UE may be a UE that is present in coverage and the Tx UE may be a LTE that is present out of coverage. Here, all the CM transmission resource and/or CM information configured by the mode 1 C-UE for the mode 2 Tx UE may be controlled by the base station. In detail, for example, a case in which the mode 1 C-LTE needs to perform CM transmission for the Tx UE may be considered. Here, when a transmission resource scheduled by the base station (e.g., configured grant/dynamic grant) and periodically reserved overlaps a CM single candidate transmission resource within the CIW, the C-UE may exclude all the corresponding transmission resources from CM single candidate resources. Also, the C-UE may perform final CM transmission resource selection and/or CM information generation based on CM transmission resource and/or CM information (i.e., a set of resources) provided from the base station.

Also, for example, the base station may transmit information on the CM transmission resource for the Tx UE to the mode 1 C-UE. That is, the mode 1 C-UE may determine the CM transmission resource for the Tx UE based on CM transmission resource information received from the base station. However, the present disclosure is not limited to the aforementioned embodiment.

Also, for example, the C-UE may exclude an arbitrary candidate single resource from the Set $S_A$ based on the following matters. For example, when priority for data transmission of the CUE is lower than that of CM transmission data, the C-UE may exclude an arbitrary candidate single resource that overlaps resources within the CIW among the resource selected for data transmission of the C-UE and resources within the reserved resource set by the C-UE.

Also, for example, the C-UE may exclude an arbitrary candidate single resource among the resource selected for data transmission of the C-UE or resources within the reserved resource set without comparison to the above, if the corresponding resource overlaps the resources within the CIW.

Also, for example, the C-LTE may preferentially exclude a CIW resource with respect to resources that overlap resources within the CIW as an arbitrary candidate single resource among the resources selected for data transmission of the C-UE or resources within the reserved resource set without comparison to the above. That is a resource for CM transmission may be dropped.

Also, if the number of resources remaining in Set $S_A$ is less than an arbitrary threshold (e.g., $X_{CM}*M_{total}$) for the number of resources for CM transmission through the procedures, the corresponding procedure may be performed again by increasing a value of $Th(p_i)$ by 3 dB. Through this, the C-UE may increase the number of resources for CM transmission. As another example, the C-UE may transmit only resources remaining in the first Set $S_A$ to the Tx UE as are without performing the procedure.

As another example, priority of the CM transmission resource and priority of the Tx UE may be compared. Here, the CM transmission resource may be determined independently of the procedure or based on the procedure. Also, for example, priority of CM transmission (e.g., defined as high priority for fast transmission) may be newly defined and considered within a resource selection procedure for the CM transmission. Also, for example, when data transmission priority of the Tx UE that requires CM transmission is provided in advance, it may be applied to the resource selection procedure for CM transmission.

As another example, the C-UE may process all of the Set $S_A$ reporting procedure and the processing procedure for CM transmission before a CM transmission slot. Then, the Tx UE that receives a CM may perform the resource selection procedure of the Tx UE based on Set $S_A$.

Also, Set $S_A$ reported to the upper layer may be transmitted to the Tx LTE through PSCCH/PSSCH that is a physical layer channel by defining a format of the following Table 8 as CM information. That is, the C-UE may transmit CM information to the Tx LTE through a data channel or may transmit the CM information to the Tx UE through PC5-RRC signaling.

Also, for example, the C-UE may include CM information in SCI based on PSCCH and may transmit the same to the Tx LTE. Description related to is made below.

[Table 8]

| MAC message |
| --- |
| E.g., MAC message over PSSCH, by introducing a new LC-ID |
| **PC5-RRC signaling** |
| SL MAC and PC5-RRC signaling are available only in unicast so far and extension to other cast types may be considered. |

The C-UE may use a field within an SCI format (e.g., SCI format 1A) as a signaling format for indicating CM information type 1 indicating a resource set to the Tx UE. For example, the field within the SCI format may be a field based on frequency/time resource allocation field (*frequency/time assignment field*), but is not limited to a corresponding name.

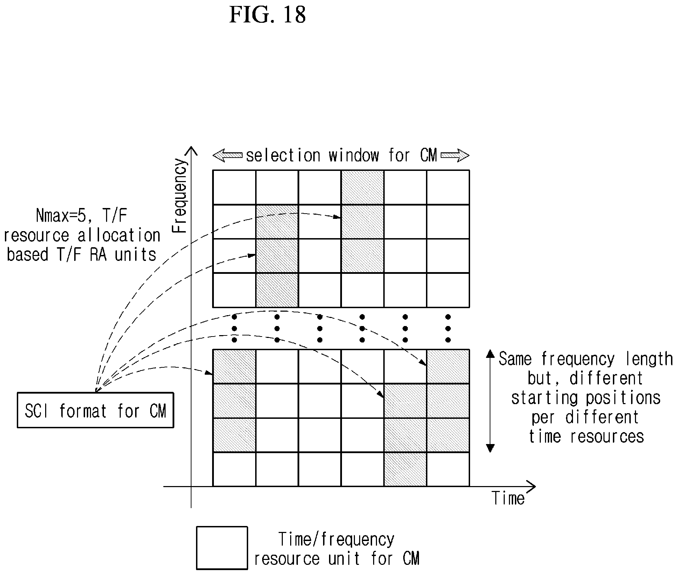

For example, parameter *"sl-MaxNumPerReserve"* may be a parameter indicating resource allocation count for a single transport block (TB) transmission. Here, *"sl-MaxNumPerReserve"* may be set up to 3. The C-UE may use a parameter indicating the resource allocation count such as the parameter as a signaling format for indicating CM information type 1 that indicates a resource set. For example, the parameter indicating the resource allocation count as the signaling format for CM information transmission may indicate resource allocation as a value of 3 or more. In detail, for example, FIG. 18 illustrates a frequency/time resource indication method for coordination message (CM) information to which the present disclosure may apply.

Referring to FIG. 18, it may be a case in which the parameter indicating the resource allocation count as the signaling format for CM information transmission is 5 ($N_{max}$=5). However, it is provided as an example only and the present disclosure is not limited to the aforementioned embodiment.

Here, a single frequency/time resource unit may be allocated based on the parameter. For example, the single frequency/time unit may be the candidate single resource $R_{x,y}$. Here, a single frequency/time unit may be a single slot/subchannel or slot (PRB) group/subchannel (PRB) group and may be pre-configured through upper layer configuration.

For example, in FIG. 18, for clarity of description, a length of one candidate single resource in a frequency domain is the same in different time slots (or slot group). However, the present disclosure is not limited thereto.

Referring to FIG. 18, with respect to an arbitrary slot (or slot group) within CIW, a starting point of an arbitrary PRB group (or subchannel group) and the number of corresponding slots (slot groups)/PRB groups (subchannel groups) may be indicated up to maximum $N_{max}$ through the SCI format based on the parameter. For example, since a value of $N_{max}$ denotes the maximum allocation count, resource allocation may be performed with respect to smaller values (e.g., 0, no resource). Here, the number of bits of a time resource allocation field and a frequency resource allocation field for the signaling may be determined according to the value of $N_{max}$ and the number of resources to be indicated, respectively.

Here, for example, the CUE may transmit signaling including the information to the Tx UE and may indicate CM transmission resource information. The C-UE may indicate the CM transmission resource information to the Tx UE through SCI format 1A or 2nd SCI. As another example, the C-UE may define a new SCI format and based thereon, may indicate the CM transmission resource information to the Tx UE.

In detail, for example, referring to FIG. 18, the C-UE may transmit, to the Tx UE, the SCI format that includes the frequency/time resources and the $N_{max}$ based on physical layer signaling. For example, as described above, the SCI format may be one of SCI format 1A, 2nd SCI, and new SCI format. Here, as described above, the frequency/time resource allocation units may be configured based on the arbitrary slot/slot group, arbitrary PRB group, and subchannel group. The SCI format may indicate starting points for the frequency/time resource allocation units within the CIW and may indicate a corresponding unit up to $N_{max}$. For example, in FIG. 18, 5 frequency/time resource allocation units may be indicated based on the SCI format for CM and $N_{max}$ =5.

As another example, when the C-UE determines a resource set as CM information type 1, the C-UE may indicate the signaling in a bitmap format in a time/frequency domain. Here, each bit may correspond to at least one slot or a unit of ms in the time domain. Also, each bit may correspond to one or more subchannels (or PRBs) in the frequency domain. That is, each bit may indicate a resource based on a corresponding unit in the time/frequency domain. For example, a plurality of time/frequency units may correspond to a single bitmap and mapping relationship may be configured or may be predetermined. Through this, signaling overhead may be reduced. Here, a length of a time domain bitmap may be determined based on a length of a CM window and/or a single time resource unit. For example, a single time resource unit may be the slot or the unit of ms, but the present disclosure is not limited to the corresponding embodiment. A single frequency resource unit may be configured using a subchannel (or PRB) group or the number of subchannels (or PRBs) within a configured resource pool and based thereon, a length of a frequency domain bitmap may be determined.

For example, the C-UE may transmit the information to the Tx UE through physical layer signaling. The C-UE may transmit the information to the Tx LTE based on at least one of SCI format 1A, 2nd SCI, a new SCI format, and PSSCH. As another example, the C-UE may transmit the information to the Tx UE through upper layer signaling (e.g., PC5 RRC, MAC CE) and the present disclosure is not limited to the aforementioned embodiment.

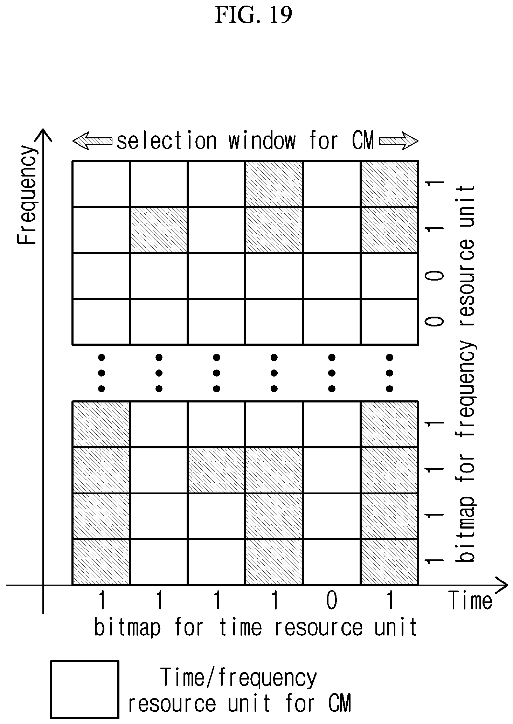

For example, in FIG. 19, each time/frequency resource unit for a CM may be determined. Here, the C-UE may indicate information on resource-allocated time/frequency resource units to the Tx LTE through a bitmap and, through this, the Tx LTE may verify resource allocation information.

Hereinafter, a method of configuring CM information based on the CM information type 2 and determining a transmission format related thereto is described.

As described above, CM information type 1 may be resource set information provided from the C-UE to the Tx UE and CM information type 2 may be channel environment and traffic loading information of the C-UE provided to the Tx UE. For example, when the C-UE receives CR information or when a specific CM transmission condition is satisfied, the C-UE may transmit CM information type 2 to the Tx LTE. As another example, when CM information type 2 transmission is set to the C-UE, the C-UE may transmit CM information type 2 information to the Tx UE.

In detail, for example, when the C-UE receives CR information or when a specific CM transmission condition is satisfied, the C-UE may transmit all of CM information type 1 and CM information type 2 to the Tx UE. As another example, when the C-UE receives CR information or when the specific CM transmission condition is satisfied, the C-UE may transmit only CM information type 2 to the Tx UE. As another example, as a case in which the C-UE receives CR information or when the specific CM transmission condition is satisfied, when CM information type 2 transmission is set, the C-UE may perform the CM information type 2 transmission. For example, the CM information type 2 transmission may be performed only when the CM information type 1 transmission is set to default and the CM information type 2 transmission is set. That is, when the C-UE receives CR information or when the specific CM transmission condition is satisfied, the C-UE may transmit CM information type 1 to the Tx UE. Here, when CM information transmission type 2 configuration is present, the C-UE may also transmit CM information type 2. The present disclosure is not limited to the aforementioned embodiment.

Here, the Tx LTE may use channel environment and traffic loading information of the C-UE for its resource sensing/selection procedure or congestion control operation. For example, the CUE may measure a CBR value for congestion control of the Tx UE and may report the measured CBR value to the Tx UE.

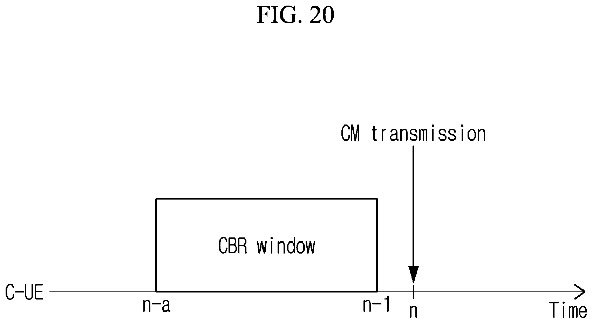

For example, FIG. 20 illustrates a method of reporting, by a C-UE, a CBR to a Tx LTE to which the present disclosure may apply.

Referring to FIG. 20, the C-UE may perform CM transmission in slot n. Here, the CBR may be measured on [n-a, n-1] before a CM transmission slot (e.g., slot n) and reported to the Tx LTE. The Tx UE may receive a CBR value of the C-UE and may use information related thereto for a resource sensing/selection procedure and congestion control operation of the Tx LTE. For example, the CBR value may be measured as a ratio between the number of subchannels corresponding to a case in which an RSSI value measured by the UE on [n-a, n-1] is greater than a specific threshold and the number of subchannels within the entire resource pool. That is, the CBR may be a ratio of channels used by the C-UE and the ratio may be determined as one of values of 0 to 100%. Here, the value of a may be set in units of physical slots in consideration of numerology (i.e., SCS). Alternatively, the value of a may be set through upper layer signaling and the present disclosure is not limited to the aforementioned embodiment.

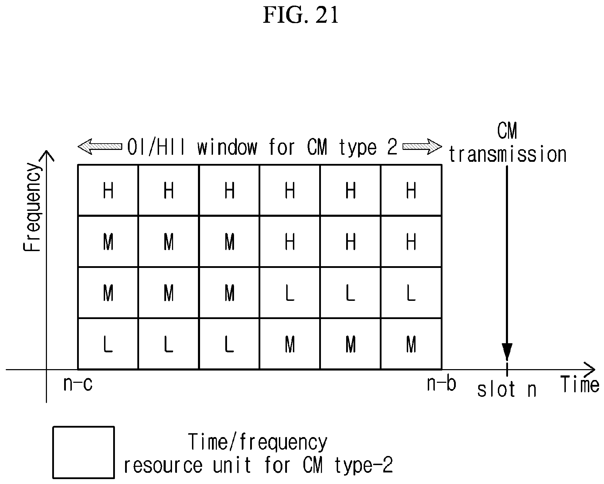

As another example, FIG. 21 illustrates a method of reporting, by a C-UE, CM information type 2 to a Tx UE to which the present disclosure may apply.

Referring to FIG. 21, the C-UE may provide more detailed channel environment information to the Tx UE through overload indicator (OI)/high interference indicator (HII) reporting. The C-UE may measure and report an OI value in a format of CM information type 2. Here, the CUE may measure a channel environment based on a specific frequency unit of a frequency domain (e.g., subchannel (subchannel group) or PRB (or PRB group)) in a time domain [n-c, n-b] based on a CM transmission slot (e.g., slot n). Here, the channel environment measurement may be used to determine an interference/noise environment corresponding to low, medium, or high based on interference and noise (e.g., RSSI) or a CBR measurement value. Alternatively, the channel environment measurement may be used to determine an interference/noise environment corresponding to low or high based on interference and noise (e.g., RSSI) or a CBR measurement value.

The C-UE may provide the Tx UE with the information based on a specific frequency unit within an OI/HII window as shown in FIG. 21. For example, referring to FIG. 21, a threshold for selecting L/M/H (or L/H) may be set through upper layer signaling. As another example, the channel environment measurement may indicate a resource of which RSSI is measured to be a threshold or more based on a specific threshold as busy and indicate other resources as idle and may provide the corresponding information to the Tx UE. The Tx UE may receive the aforementioned information as CM type 2 information. Here, the Tx UE may consider corresponding CM information when performing a resource selection operation. For example, when high interference is expected for specific resources selected through a resource selection procedure, and/or in a congestion control operation, the Tx LTE may determine CM information as a Tx parameter with a quality of service (QoS) parameter. Here, values of b and c may be set in units of physical (or logical) slots in consideration of numerology (i.e., SCS). As another example, values of b and c may be set through upper layer signaling and the present disclosure is not limited to the aforementioned embodiment.

As another example, information used for the C-UE to request the Tx UE for resource reselection (hereinafter, CM information type 3) may be determined as CM information. That is, the C-UE may transmit the CM information type 3 indicating the resource reselection to the Tx UE. Here, the C-UE may provide at least one of the CM information type 1, the CM information type 2, and the CM information type 3 to the Tx LTE. That is, the CM information type 3 may be transmitted to the Tx UE with other CM information types or standalone. Here, when a collision is predicted or detected in SCI received from neighboring UEs that include the Tx UE, the C-UE may indicate the resource reselection to the Tx UE through the CM information type 3. As another example, when the C-UE needs to perform HARQ feedback transmission with respect to many PSSCH transmissions within a single PSFCH slot, the CUE may indicate the resource reselection to the Tx UE based on the CM information type 3. That is, the C-UE may indicate the resource reselection to the Tx UE by considering that corresponding information is dropped or PSFCH Tx power decreases according to LTE capability when feedback transmission is performed for many PSSCH transmissions within a single PSFCH slot.

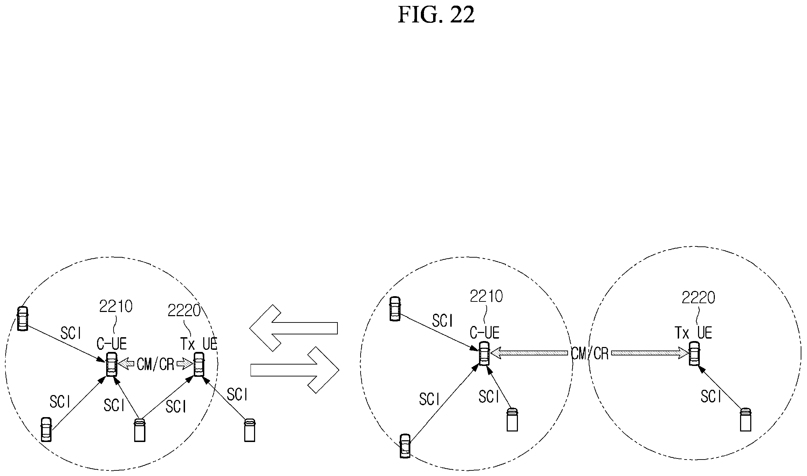

FIG. 22 illustrates a method of transmitting, by a C-UE, CM information to a Tx LTE in consideration of communication range to which the present disclosure may apply. Referring to FIG. 22, as described above, a C-UE 2210 may receive a CR from a Tx LTE 2220 and may transmit CM information based on the CR. Here, the C-UE 2210 may determine whether to report a CM or whether to consider transmission of CM information to the Tx UE 2220 based on communication range information received from the Tx UE. Here, the C-UE 2210 may verify communication range information through SCI received from the Tx UE 2220 and may operate based thereon.

In detail, referring to FIG. 22, when a distance between the C-UE 2210 and the Tx UE 2220 increases, validity of CM information provided from the C-UE 2210 may decrease. That is, the CM information may not be valid for the Tx UE 2220. Considering this, the C-UE 2210 may determine whether to report the CM based on communication range information and a corresponding threshold. Here, computation of the distance between the C-UE 2210 and the Tx UE 2220 may be induced based on a zone ID value.

For example, the Tx LTE 2220 may determine CM transmission by the C-UE according to a preset parameter related to communication range requirements for CM transmission. As another example, the C-UE 2210 may receive SCI from the Tx UE 2220 and then may verify whether the Tx UE 2220 is present within a preset distance based on a zone ID of the C-UE 2210 and a zone ID of the Tx UE 2220. Here, when the distance between the C-UE 2210 and the Tx UE 2220 is outside the preset distance, the C-UE 2210 may not report the CM to the Tx UE 2220. On the contrary, when the distance between the C-UE 2210 and the Tx UE 2220 is within the preset distance, the C-UE 2210 may report the CM to the Tx UE 2220.

Also, for example, SL RLF and SL RSRP values may be additionally considered to determine whether to transmit the CM and the present disclosure is not limited to the aforementioned embodiment.

As another example, as described above, the C-UE may transmit at least one of CM information type 1, CM information type 2, and CM information type 3 to the Tx UE. Here, a sidelink physical layer channel through which CM information is transmitted may be a PSCCH. Alternatively, a sidelink physical layer channel through which CM information is transmitted may be a PSCCH/PSSCH. In detail, for example, CM information may be transmitted through one or more channels of the following table according to a size of proposed CM information.

In detail, CM information may be transmitted to the Tx UE through the PSSCH. That is, the C-UE may include CM information in a data channel based on a MAC message or PC5-RRC signaling and may transmit the same to the Tx UE.

As another example, the C-UE may include CM information in SCI based on the PSCCH and thereby transmit the same. Here, the CM information may be defined as an additional field in the existing SCI format and thereby transmitted. As another example, a new SCI format for CM information may be defined.

As another example, a separate physical channel for CM information transmission may be configured. That is, a new physical channel for CM information transmission may be defined and the present disclosure is not limited to the aforementioned embodiment.

Also, for example, a time domain transmission method of CM information may be determined as a periodic, aperiodic, or semi-static transmission method through a type of coordinated resource and upper layer configuration.

[Table 9]

| PSSCH |
|---|
|     - MAC message<br>         E.g., MAC message over PSSCH, by introducing a new LC-ID<br>    - PC5-RRC signaling |
| **New 2nd SCI format** |
| **existing 1st/2nd stage SCI format** |
| **New physical channel** |

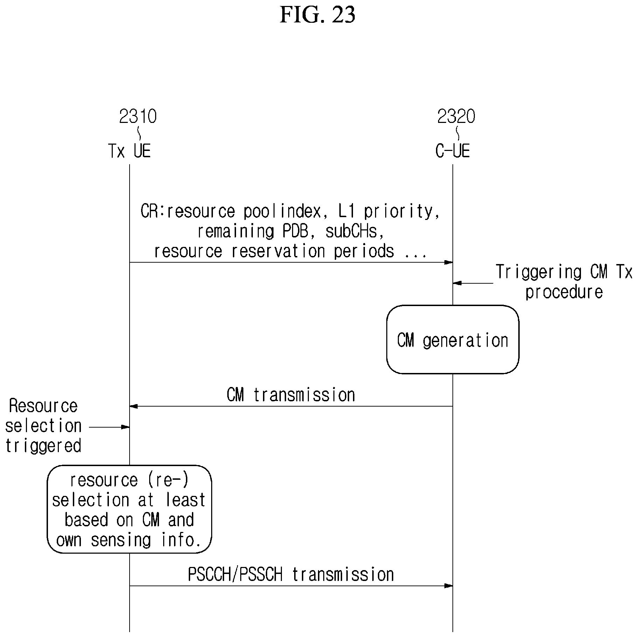

FIG. 23 illustrates a CM transmission procedure to which the present disclosure may apply. Referring to FIG. 23, a Tx UE 2310 may transmit a CR to a C-UE 2320. Here, the CR may include at least one of a resource pool index, L1 priority, remaining PDB, L subchannels, and resource reservation period information. Also, for example, the CR may further include other information related to CM information and the present disclosure is not limited to the aforementioned embodiment. The C-UE 2320 may generate a CM for the Tx UE 2310. Here, the C-UE may generate CM information through a preset value based on CR information received from the Tx LTE. In detail, the C-LTE 2320 may verify candidate resources through sensing information. For example, the C-UE 2320 may include information on candidate resources in the CM and may transmit the same to the Tx UE 2310. Also, for example, the CUE 2320 may verify candidate resources based on information of the following Table 10 and may determine a resource set (set A) to be provided to the Tx UE 2310 among the candidate resources in consideration of at least one of transmission resource reservation and channel state information. The C-UE 2320 may transmit information on the resource set to the Tx UE 2310.

[Table 10]

| |
|---|
| - Tx-LTE reference priority |
| - L1 priority from Tx LTE (CR)<br>         : When determining an RSRP threshold, replace with a value of pi. (pi from Tx<br>UE, pj from SCI of other UEs) |
| - Remaining PDB (or validity time or T2) received from Tx LTE (CR) |
| - Number of sub-channels (i.e., L sub-CHs) for PSSCH/PSCCH within a single slot received from Tx LTE (CR) |
| - Resource reservation period value received from Tx LTE (CR) |
| - X percentage (%) received from Tx LTE (CR) |
| - T1 value received from Tx LTE (CR) |
| - Communication range received from Tx LTE (CR)<br>         : Determine whether to report CM and whether to consider CM information by<br>Tx UE in the future based on a communication range value |
| - RS for sensing received from Tx LTE (CR)<br>         : Provide information on which RSRP value between PSSCH-RSRP and<br>PSCCH-RSRP is to be used for C-UE to perform sensing |

(continued)

<table>
<tr><td colspan="2">- p-preemption value received from Tx LTE (CR)</td></tr>
<tr><td></td><td>: C-LTE receives a p-preemption value available when selecting a resource through comparison to L1 priority information in SCI received from a neighboring LTE.</td></tr>
</table>

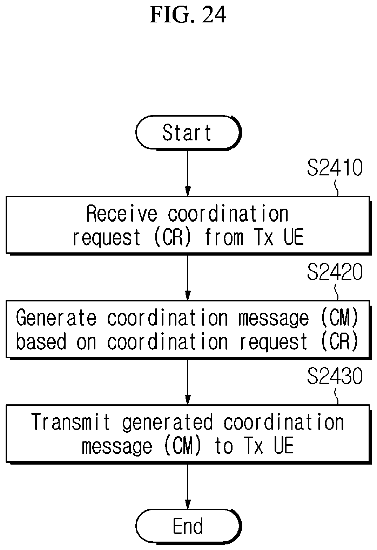

FIG. 24 is a flowchart illustrating a CM transmission procedure to which the present disclosure may apply.

Referring to FIG. 24, in operation S2410, a C-UE may receive a coordination request (CR) from a Tx UE. A MAC/RRC layer of the Tx UE may provide resource configuration information for CR transmission to a physical layer and, based thereon, may request the physical layer for CR transmission. As another example, a physical layer of a LTE may perform CR transmission based on configuration provided from an upper layer without a request from the upper layer. In operation S2420, the C-UE may generate a coordination message (CM) based on the CR. Here, the C-UE may generate the CM based on explicit signaling (CR) of the Tx LTE. As another example, the C-UE may generate the CM when a specific condition (or event) is recognized to be satisfied even without explicit signaling. In operation S2430, the CUE may transmit the generated CM to the Tx UE. Here, the generated CM may have a different type. For example, a CM information type may be the CM information type 1 that is information on a set of resources. As another example, the CM information type may be the CM information type 2 that is channel environment and traffic related information of the CUE. As another example, the CM information type may be the CM information type 3 that is information indicating resource reselection or abandonment of the Tx UE, which is described above. The C-UE may transmit at least one of the CM type information 1, CM type information 2, and CM type information 3 to the Tx LTE. The Tx UE may perform resource reselection based on CM information received from the C-UE. Also, for example, a resource for CM transmission may be determined by the C-UE through sensing. As another example, as described above, the resource for CM transmission may be a preset dedicated resource and through this, CM information may be transmitted.

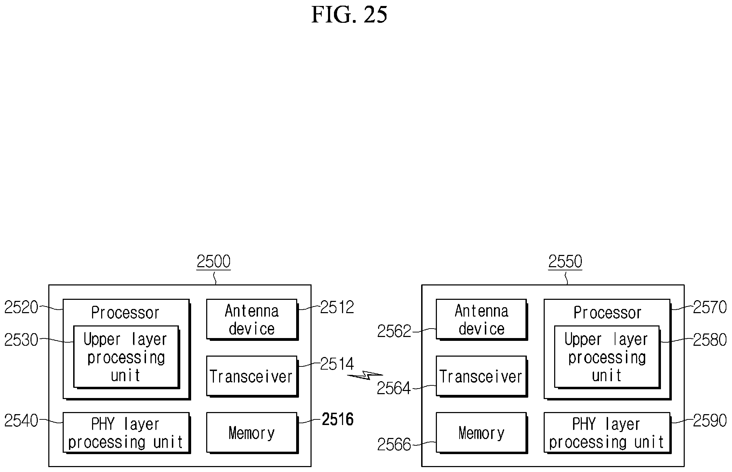

FIG. 25 is a diagram illustrating a configuration of a base station device and a terminal device to which the present disclosure may apply.

A base station device 2500 may include a processor 2520, an antenna device 2512, a transceiver 2514, and a memory 2516.

The processor 2520 may perform baseband-related signal processing and may include an upper layer processing unit 2530 and a physical (PHY) layer processing unit 2540. The upper layer processing unit 2530 may process an operation of a medium access control (MAC) layer, a radio resource control (RRC) layer, or more upper layers. The PHY layer processing unit 2540 may process an operation (e.g., uplink received signal processing, downlink transmission signal processing, etc.) of a PHY layer. The processor 2520 may also control the overall operation of the base station device 2500, in addition to performing the baseband-related signal processing.

The antenna device 2512 may include at least one physical antenna. If the antenna device 2512 includes a plurality of antennas, multiple input multiple output (MIMO) transmission and reception may be supported. Also, beamforming may be supported.

The memory 2516 may store operation-processed information of the processor 2520, software, an operating system (OS), and an application related to an operation of the base station device 2500, and the like, and may include a component, such as a buffer.

The processor 2520 of the base station 2500 may be configured to implement an operation of a base station in the embodiments set forth herein.

A terminal device 2550 may include a processor 2570, an antenna device 2562, a transceiver 2564, and a memory 2566. For example, in the present disclosure, the terminal device 2550 may communicate with the base station device 2500. As another example, in the present disclosure, the terminal device 2550 may perform sidelink communication with another terminal device. That is, the terminal device 2550 of the present disclosure refers to any device capable of communicating with at least one of the base station device 2500 and another terminal device and is not limited to communication with a specific device.

The processor 2570 may perform baseband-related signal processing and may include an upper layer processing unit 2580 and a PHY signal processing unit 2590. The upper layer processing unit 2580 may process an operation of a MAC layer, an RRC layer, or more upper layers. The PHY processing unit 2590 may process an operation (e.g., downlink received signal processing, uplink transmission signal processing, etc.) of a PHY layer. The processor 2570 may control the overall operation of the terminal device 2550 in addition to performing the baseband-related signal processing.

The antenna device 2562 may include at least one physical antenna. If the antenna device 2562 includes a plurality of antennas, MIMO transmission and reception may be supported. Also, beamforming may be supported.

The memory 2566 may store operation-processed information of the processor 2570, software, an OS, and an application related to an operation of the terminal device 2550, and the like, and may include a component such as a buffer.

Here, the processor 2570 of the terminal device 2550 may receive a coordination request (CR) from another terminal device (e.g., Tx UE) through the antenna device 2562. Alternatively, the processor 2570 of the processor 2550 may transmit a coordination message (CM) from another terminal device (e.g., Tx LTE) through the antenna device 2562. The coordination request may include 1-bit information to indicate a case in which the other terminal device performs the coordination request with respect to the terminal device 2550 or a case in which the other terminal device does not perform the coordination request with respect to the terminal device 2550. Also, the coordination message may be the CM information type 1 that is information on a set of resources. As another example, the coordination message may be the CM information type 2 that is information related to channel environment and traffic of a CUE. As another example, as described above, the coordination message may be the CM information type 3 that is information indicating resource reselection or abandonment of a Tx UE, which is described above. The processor 2570. of the terminal device 2550 may transmit at least one of the CM type information 1, the CM type information 2, and the CM type information 3 to the other UE (e.g., Tx UE) through the antenna device 2562.

Also, for example, the processor 2570 of the terminal device 2550 may perform resource selection for coordination message transmission. Here, the processor 2570 of the terminal device 2550 may determine a resource for coordination message transmission through the antenna device 2562. Also, for example, as described above, the processor 2570 of the terminal device 2550 may transmit the coordination message through the antenna device 2562 as a resource dedicated for the coordination message.

The terminal device 2550 according to an example of the present disclosure may be associated with a vehicle. For example, the terminal device 2550 may be integrated in the vehicle, may be located in the vehicle, or may be located on the vehicle. Also, the terminal device 2550 according to the present disclosure may be the vehicle itself. Also, the terminal device 2550 according to the present disclosure may be at least one of a wearable terminal, AR/VR, an Internet of things (IoT) terminal, a robot terminal, and a public safety terminal. The terminal device 2550 to which the present disclosure may apply may include various types of communication devices that support an interactive service using sidelink, for services, for example, Internet access, service execution, navigation, real-time information, autonomous driving, and safety-and-risk diagnosis. Also, the terminal device 2550 may include an AR/VR device capable of performing a sidelink operation or any type of communication devices capable of performing a relay operation as a sensor.

Here, the vehicle to which the present disclosure applies may include an autonomous vehicle, a semi-autonomous vehicle, and a non-autonomous vehicle. Meanwhile, although the terminal device 2550 according to an example of the present disclosure is described in association with the vehicle, at least one of the UEs may not be associated with the vehicle. It is provided as an example only and should not be interpreted to limit application of the present disclosure.

Also, the terminal device 2550 according to an example of the present disclosure may include various types of communication devices capable of performing coordination that supports an interactive service using sidelink. That is, the terminal device 2550 may directly support the interactive service using a sidelink and may be employed as a coordination device for supporting the interactive service using the sidelink.

Also, various examples of the present disclosure may be implemented by hardware, firmware, software, or combination thereof. In the case of implementation by hardware, the examples may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that operations of the method of the various examples may be executed on an apparatus or a computer, and a non-transitory computer-readable medium storing such software or instructions to be executable on an apparatus or a computer.

Various embodiments of the present disclosure are to explain representative aspects of the present disclosure rather than listing all the possible combinations and matters described in the various embodiments may be applied alone or in combination of at least two of the embodiments.

INDUSTRIAL APPLICABILITY

The above may be applied to various systems.

**Claims**

1. A method of supporting, by a user equipment (UE), sidelink communication in a wireless communication system, the method comprising:

receiving a coordination request from a transmitting UE (Tx LTE);
generating a coordination message based on the coordination request; and
transmitting the generated coordination message to the Tx UE,

wherein

the generated coordination message is generated based on a different type, and
a resource used to transmit the coordination message is configured based on at least
one of a pre-configured dedicated resource and a resource determined by sensing.

FIG. 1

| Downlink frame *i* |
| :---: |

| Uplink frame *i* |
| :---: |

$$N_{TA} \, T_s$$

# FIG. 2

One sub frame

$N_{\text{sub frame}}^{\text{symbols},\mu}$ OFDM symbols

$k = N_{RB}^{\mu} N_{sc}^{RB} - 1$

$N_{RB}^{\mu} N_{sc}^{RB}$ subcarriers

$N_{sc}^{RB}$ subcarriers

Resource block

Resource element
-$(k,\bar{l})$ in resource grid
-$(k,l)$ in resource block

$k = 0$

$l = 0$

$\bar{l} = 14 \cdot 2^{\mu} - 1$

# FIG. 3

EP 4 236 520 A1

FIG. 4

| | | | | | C-V2X | |
|------|----------|----------|---------|---------|-----|--------------|
| V2V | Reserved | Reserved | Tolling | Control | I2V | PVD/Security |
| CH 1 | CH 2 | CH 3 | CH 4 | CH 5 | CH 6 | CH 7 |

5,855   5,865   5,875   5,885   5,895   5,905   5,915   5,925 MHz

FIG. 5

Total number of configured subchannels

Number of subchannels used for Tx of UE

Number of subchannels granted to UE

n−a          n−1 n          n+b

## FIG. 6

620-1 — Reservation from UE1

620-2 — Reservation from UE2

Time

(a)

(b)

UE2   UE1  UE3        UE4

630-2   630-1  630-3      630-4

$<T_3$

640-1 — Reservation from UE1

640-2

Reservation from UE2

Time

(c)

(d)

# FIG. 7

710-1
C-UE

CM

SL data Tx

Tx-UE

710-2

(a)

720-1
C-UE

CM

Tx-UE

720-2

SL data Tx

Rx-UE

720-3

(b)

730-1
gNB

SL control

730-4
C-UE
(Mode 1)

CM

Tx-UE

730-2

SL data Tx

Rx-UE

730-3

(c)

# FIG. 8

FIG. 9

EP 4 236 520 A1

910
Tx UE

SL data Tx/Rx

Resource
reselection

resource
coordination
message

C-UE

920

prepare
coordination
message

Condition
satisfied

# FIG. 10

Triggering CM Tx
resource selection
and CM generation

Reflecting the sensing results

| CR resources | | CM resources | | | | |
| CR resources | | CM resources | | | X | | X |
| CR resources | T_A#2 T_B#2 | CM resources | T_C#2 | | X | | X |
| CR resources | | CM resources | | | X | | |

T_A#1 T_B#1     T_C#1

a                    b  slot n  c                    d      e                    f    Time

◄——— Sensing window ———►    ◄—— CM Tx window——►    ◄——— Coordination ———►
                                                        information window
        1010                        1020                    1030

EP 4 236 520 A1

# FIG. 11

EP 4 236 520 A1

# FIG. 12

Triggering CM Tx
resource selection
and CM generation

Reflecting the sensing results

CR resources
CR resources
CR resources
CR resources

T_A#1 | T_B#1

T_A#2

T_B#2

CM resources
CM resources
CM resources
CM resources

T_C#1

X
X
X

X
X
X

CM resources
CM resources
CM resources
CM resources

T_B#1

X
X

X
X

a | b slot n | c | slot k | d | e | f | slot k+p | g | h | Time

Sensing window
1210

CM Tx window
1220-1

Coordination
information window
1230-1

1220-2

Coordination
information window
1230-2

Periodic CM Tx reservation

Periodic CM Tx reservation

# FIG. 13

EP 4 236 520 A1

FIG. 14

sensing check point for
dedicated resource set

Dedicated
resource set

Reservation

Sensing window

Resource selection
window in CM

Reflecting the sensing results

Periodicity        Periodicity        Periodicity

Time

EP 4 236 520 A1

# FIG. 15

# FIG. 16

# FIG. 17

# FIG. 18

selection window for CM

Frequency

Nmax=5, T/F
resource allocation
based T/F RA units

SCI format for CM

Same frequency length
but, different
starting positions
per different
time resources

Time

Time/frequency
resource unit for CM

FIG. 19

FIG. 20

## FIG. 21

Ol/HII window for CM type 2 ⟸⟹  CM transmission

| Frequency | | | | | |
|---|---|---|---|---|---|
| H | H | H | H | H | H |
| M | M | M | H | H | H |
| M | M | M | L | L | L |
| L | L | L | M | M | M |

n-c    ...    n-b  slot n  Time

☐ Time/frequency resource unit for CM type-2

FIG. 22

FIG. 23

# FIG. 24

```
              ┌─────────────┐
              │    Start     │
              └─────────────┘
                     │
                     │              S2410
                     ▼
        ┌────────────────────────────┐
        │     Receive coordination    │
        │    request (CR) from Tx UE  │
        └────────────────────────────┘
                     │
                     │              S2420
                     ▼
        ┌────────────────────────────┐
        │ Generate coordination message (CM) │
        │ based on coordination request (CR) │
        └────────────────────────────┘
                     │
                     │              S2430
                     ▼
        ┌────────────────────────────┐
        │  Transmit generated coordination │
        │     message (CM) to Tx UE   │
        └────────────────────────────┘
                     │
                     ▼
              ┌─────────────┐
              │     End      │
              └─────────────┘
```

# FIG. 25

## INTERNATIONAL SEARCH REPORT

International application No.

**PCT/KR2021/014876**

| A. | CLASSIFICATION OF SUBJECT MATTER |
|---|---|

**H04W 72/02**(2009.01)i; **H04W 72/12**(2009.01)i; **H04W 74/08**(2009.01)i; **H04W 4/46**(2018.01)i

According to International Patent Classification (IPC) or to both national classification and IPC

| B. | FIELDS SEARCHED |
|---|---|

Minimum documentation searched (classification system followed by classification symbols)

H04W 72/02(2009.01); H04B 7/26(2006.01); H04W 88/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X, sidelink, Tx UE, C-UE(coordination-UE), coordination, request, message, resource, sensing

| C. | DOCUMENTS CONSIDERED TO BE RELEVANT |
|---|---|

| Category* | Citation of document, with indication, where appropriate, of the relevant passages | Relevant to claim No. |
|---|---|---|
| X | SPREADTRUM COMMUNICATIONS. Discussion on feasibility and benefit of mode 2 enhancements. R1-2006268, 3GPP TSG RAN WG1 #102-e. e-Meeting. 08 August 2020. See sections 2.2.1-2.2.2; and figure 2. | 1 |
| A | ERICSSON. Feasibility and benefits of mode 2 enhancements for inter-UE coordination. R1-2006445, 3 GPP TSG-RAN WG1 Meeting #102-e. e-Meeting. 07 August 2020. See section 4. | 1 |
| A | HUAWEI et al. Inter-UE coordination in sidelink resource allocation. R1-2005255, 3GPP TSG RAN WG1 Meeting #102-e. E-meeting. 08 August 2020. See section 3. | 1 |
| A | FUJITSU. Considerations on inter-UE coordination for mode 2 enhancements. R1-2005546, 3GPP TSG RAN WG1 #102-e. e-Meeting. 07 August 2020. See sections 3-4. | 1 |
| A | US 2019-0357305 A1 (HUAWEI TECHNOLOGIES CO., LTD.) 21 November 2019 (2019-11-21) See paragraphs [0076]-[0126]; and figures 7-12. | 1 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **21 January 2022** | **21 January 2022** |

| Name and mailing address of the ISA/KR | Authorized officer |
|---|---|
| Korean Intellectual Property Office Government Complex-Daejeon Building 4, 189 Cheongsa-ro, Seo-gu, Daejeon 35208 |  |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/014876**

| Patent document cited in search report | | | Publication date (day/month/year) | Patent family member(s) | | | Publication date (day/month/year) |
|---|---|---|---|---|---|---|---|
| US | 2019-0357305 | A1 | 21 November 2019 | CN | 108512576 | A | 07 September 2018 |
| | | | | EP | 3557930 | A1 | 23 October 2019 |
| | | | | EP | 3557930 | A4 | 15 January 2020 |
| | | | | WO | 2018-157673 | A1 | 07 September 2018 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1410

- FR 22425